# EUROPÄISCHE PATENTANMELDUNG

(11) **EP 4 647 821 A1**
(43) Veröffentlichungstag der Anmeldung: **12.11.2025**
(21) Anmeldenummer: 24175125.4
(22) Anmeldetag: 10.05.2024
(51) Int. Cl.: G02B 6/38

(54) **OPTISCHE FERRULE UND OPTISCHER STECKVERBINDER MIT EINER OPTISCHEN FERRULE**

(71) Anmelder: Rosenberger Hochfrequenztechnik GmbH & Co. KG, 83413 Fridolfing (DE)
(72) Erfinder: Fischer, Andreas, 83413 Fridolfing (DE); Schmidt, Stefan, 83413 Fridolfing (DE); Maier, Thomas, 83413 Fridolfing (DE); Bredbeck, Till, 83413 Fridolfing (DE)
(74) Vertreter: Lorenz, Matthias

(57) **Zusammenfassung**

Eine optische Ferrule (1) zur Ausrichtung eines Lichtwellenleiters (3) mit einem Gegenlichtwellenleiter (3'') einer optischen Gegenferrule (6) weist einen Fixierungsbereich (4) zur Fixierung eines axialen Endabschnitts (12) des Lichtwellenleiters (3) auf. Der Fixierungsbereich (4) ist derart ausgebildet, dass eine Längsachse des axialen Endabschnitts (12) des Lichtwellenleiters (3) in einer Steckrichtung S der optischen Ferrule (1) ausrichtbar ist. Die optische Ferrule (1) weist ferner einen optischen Bereich (5) zur Strahlformung zwischen einem in dem Lichtwellenleiter (3) übertragenen Lichtstrahlbündel und dem in einem Freiraum fokussiert oder kollimiert übertragenen Lichtstrahlbündel auf. Der optische Bereich schließt sich in der Steckrichtung S an den Fixierungsbereich (4) axial an und in ihm ist ein Strahlformungsmittel (9) mit einer in der Steckrichtung S verlaufenden optischen Achse ausgebildet. Die optische Ferrule (1) weist schließlich wenigstens einen Führungsbereich (7) mit einer Längserstreckung in der Steckrichtung S auf, welcher jeweils einen nutförmigen Teilabschnitt (7₁) aufweist. Die nutförmigen Teilabschnitte (7₁) sind jeweils seitlich benachbart zum Strahlformungsmittel (9) ausgebildet und sind eingerichtet, sich jeweils mit einem rippenförmigen Teilabschnitt (8₁) eines zugehörigen Gegenführungsbereichs (8) der optischen Gegenferrule (6) auszurichten.

## Beschreibung

### GEBIET DER ERFINDUNG

Die vorliegende Erfindung betrifft eine optische Ferrule zur Fixierung und zur Ausrichtung eines Lichtwellenleiters mit einem Gegenlichtwellenleiter einer optischen Gegenferrule.

Die vorliegende Erfindung betrifft außerdem einen optischen Steckverbinder, welcher in einem Steckverbindergehäuse eine optische Ferrule aufweist.

Die vorliegende Erfindung betrifft schließlich auch eine optische Steckverbindung aus einem optischen Steckverbinder und einem zugehörigen optischen Gegensteckverbinder.

### TECHNISCHER HINTERGRUND

Zur Übertragung von Daten zwischen verschiedenen Aggregaten im Automobil ist eine elektrische Verbindungstechnik noch weit verbreitet. Gegenüber einer elektrischen Verbindungstechnik ist eine optische Übertragungstechnik aber unempfindlicher gegenüber elektromagnetischen Einstreuungen. Außerdem ermöglicht ein optisches Datennetz eine Datenübertragung mit einer höheren Bandbreite und ist mit einem geringeren Verkabelungsgewicht und somit geringeren Verkabelungskosten verbunden.

In optischen Datennetzen im Automobilbau sind bisher Kunststofflichtleiter im Einsatz. Glasfaserlichtleiter ermöglichen aber gegenüber Kunststofflichtleitern eine höhere Bandbreite in der Datenübertragung und einen Einsatz in einem höheren Temperaturbereich und sind somit für eine Hochgeschwindigkeitsdatenübertragung in zukünftigen Automobilgenerationen sehr interessant. Während der Kerndurchmesser eines Kunststofflichtleiters ca. 1 mm groß ist, ist der Kerndurchmesser eines Glasfaserlichtleiters deutlich kleiner und beträgt für eine Multimode-Übertragung ca. 50 um und für eine Monomode-Übertragung ca. 10 um.

An die Ausrichtung von zu koppelnden Glasfaserlichtleitern in einer optischen Steckverbindung sind somit deutlich höheren Anforderung als im Fall der Kopplung von Kunststofflichtleitern gestellt.

Dies ist ein Zustand, den es zu verbessern gilt.

### BESCHREIBUNG DER ERFINDUNG

Vor diesem Hintergrund liegt der vorliegenden Erfindung die Aufgabe zugrunde, eine technische Lösung für eine Ausrichtung von zu koppelnden Lichtwellenleitern in einer optischen Verbindung, insbesondere in einer optischen Steckverbindung, mit einer hohen Exaktheit anzugeben.

Erfindungsgemäß wird diese Aufgabe durch eine optische Ferrule mit den Merkmalen des Patentanspruchs 1 gelöst.

Demgemäß ist vorgesehen:
Eine optische Ferrule zur Ausrichtung eines Lichtwellenleiters, vorzugsweise einer optischen Faser, mit einem Gegenlichtwellenleiter, vorzugsweise einer optischen Gegenfaser, einer optischen Gegenferrule aufweisend
- einen Fixierungsbereich zur Fixierung eines axialen Endabschnitts des Lichtwellenleiters, wobei der Fixierungsbereich derart ausgebildet ist, dass eine Längsachse des axialen Endabschnitts des Lichtwellenleiters in einer Steckrichtung der optischen Ferrule ausrichtbar ist,
- einen optischen Bereich zur Strahlformung zwischen einem in dem Lichtwellenleiter übertragenen Lichtstrahlbündel und dem in einem Freiraum fokussiert oder kollimiert übertragenen Lichtstrahlbündel, welcher sich in der Steckrichtung an den Fixierungsbereich axial anschließt und
- in welchem für den Lichtwellenleiter ein Strahlformungsmittel, vorzugsweise eine Sammellinse, mit einer in der Steckrichtung verlaufenden optischen Achse ausgebildet ist, und
- wenigstens einem Führungsbereich mit einer Längserstreckung in der Steckrichtung, welcher jeweils einen nutförmigen Teilabschnitt aufweist,
- wobei die nutförmigen Teilabschnitte jeweils seitlich benachbart zum Strahlformungsmittel ausgebildet sind und
- eingerichtet sind, sich jeweils mit einem rippenförmigen Teilabschnitt eines zugehörigen Gegenführungsbereichs der optischen Gegenferrule auszurichten.

Die der vorliegenden Erfindung zugrunde liegende Erkenntnis/Idee besteht darin, eine optische Kopplung zwischen einzelnen optischen Glasfasern eines optischen Steckverbinders und den zugehörigen optischen Glasfasern eines optischen Gegensteckverbinders zu verwirklichen, in der das von den einzelnen optischen Glaserfasern jeweils abgestrahlte Lichtstrahlbündel in der Steckrichtung der optischen Steckverbindung fokussiert oder kollimiert geformt wird und das fokussiert oder kollimiert geformte Lichtstrahlbündel jeder optischen Glasfaser ohne einen Versatz und somit ohne einen optischen Verlust in die zugehörige optische Glasfaser des optischen Gegensteckverbinders eingespeist wird.

Hierzu ist eine erfindungsgemäße optische Ferrule vorgesehen, in der die drei folgenden technischen Maßnahmen verwirklicht sind:
1) ein Fixierungsbereich der optischen Ferrule, in der jede optische Faser in ihrem axialen Endbereich in der Steckrichtung der optischen Ferrule, d. h. in Längsachsrichtung der optischen Ferrule, jeweils ausgerichtet ist und somit ein Lichtstrahlbündel an einer Faserendfläche der optischen Faser in einem Lichtkegel mit einer Symmetrieachse in der Steckrichtung abgestrahlt wird,
2) ein optischer Bereich der optischen Ferrule, der sich in der Steckrichtung an den Fixierungsbereich axial anschließt und der für jede optische Faser jeweils ein Strahlformungsmittel, vorzugsweise eine Sammellinse, aufweist; im Strahlformungsmittel wird das in einem Lichtkegel abgestrahlte Lichtstrahlbündel des Lichtwellenleiters in ein in der Steckrichtung fokussiert oder kollimiert geformtes Lichtstrahlbündel mit einer optischen Achse in der Steckrichtung in einen sich an den optischen Bereich axial anschließenden Freiraum abgestrahlt oder wird aus dem Freiraum ein fokussiert oder kollimiert geformtes Lichtstrahlbündel mit einer optischen Achse in der Steckrichtung empfangen und in den Lichtwellenleiter eingekoppelt, und
3) wenigstens ein Führungsbereich der optischen Ferrule, in dem jeweils ein nutförmiger Teilabschnitt zur Führung eines rippenförmigen Teilabschnitts einer optischen Gegenferrule ausgebildet ist.

Mit der zuletzt genannten technischen Maßnahme von wenigstens einem Führungsbereich ist jeweils eine Linearführung zwischen der optischen Ferrule und der optischen Gegenferrule in der Steckrichtung verwirklicht, so dass im gesteckten Zustand der optischen Ferrule und der optischen Gegenferrule die Längsachse der optischen Ferrule auf der Längsachse der optischen Gegenferrule zu liegen kommt. Die optischen Achsen der zueinander gehörigen Formstrahlungsmittel der optischen Ferrule und der optischen Gegenferrule kommen zur Deckung, wenn die optischen Achsen der Formstrahlungsmittel jeweils parallel zur Längsachse der optischen Ferrule bzw. der optischen Gegenferrule gerichtet sind und jeweils in einer gleichen seitlichen Lage zur Längsachse der optischen Ferrule bzw. der optischen Gegenferrule ausgebildet sind.

Somit ist gesichert, dass im Fall einer unidirektionalen optischen Übertragung das fokussierte oder kollimierte Lichtstrahlbündel des einzelnen Strahlformungsmittels der optischen Ferrule jeweils vollständig auf dem zugehörigen Strahlformungsmittel der optischen Gegenferrule auftrifft und an der Faserendfläche der zugehörigen optischen Faser in der Gegenferrule eingekoppelt wird. Äquivalent ist im Fall einer bidirektionalen optischen Übertragung gesichert, dass das vom einzelnen Strahlformungsmittel der optischen Ferrule oder der optischen Gegenferrule fokussiert oder kollimiert abgestrahlte Lichtstrahlbündel auf dem zugehörigen Strahlformungsmittel der optischen Gegenferrule bzw. der optischen Ferrule auftrifft. In beiden Fällen ist vorteilhaft eine Reduzierung der Signaldämpfung bzw. der Einfügedämpfung und eine Erhöhung der Rückflussdämpfung der optischen Übertragung erzielt.

Durch die wenigstens eine Linearführung zwischen der optischen Ferrule und der optischen Gegenferrule ist die optische Ferrule in zwei translatorischen Dimensionen, d. h. in einer ersten Querrichtung, welche orthogonal zur Längsachsrichtung und somit zur Steckrichtung orientiert ist, und in einer zweiten Querrichtung, welche orthogonal zur Längsachsrichtung (bzw. zur Steckrichtung) und zur ersten Querrichtung orientiert ist, jeweils zur Gegenferrule ausgerichtet. Außerdem ist die optische Ferrule durch die wenigstens eine Linearführung zwischen der optischen Ferrule und der optischen Gegenferrule in drei rotatorischen Dimensionen zur Gegenferrule ausgerichtet und kann sich somit nicht relativ zur Längsachse und zu zwei Querachsen der optischen Ferrule jeweils drehen bzw. kippen. Einzig in der Längsachsrichtung (bzw. in Steckrichtung) der optischen Ferrule bietet die wenigstens eine Linearführung jeweils eine Bewegungsfreiheit, welche aber bei einem in der Längsachsrichtung zwischen den Strahlformungsmitteln der optischen Ferrule und der optischen Gegenferrule fokussiert oder kollimiert übertragenen Lichtstrahlbündel nicht zwingend erforderlich ist.

Eine derartige Linearführung verwirklicht nicht nur während des Steckvorgangs eine Ausrichtung zwischen der optischen Ferrule und der zugehörigen optischen Gegenferrule, sondern ermöglicht auch, dass im gesteckten Zustand im nutförmigen Teilabschnitt jedes Führungsbereichs der optischen Ferrule der rippenförmige Teilabschnitt des zugehörigen Gegenführungsbereichs der optischen Gegenferrule aufgenommen ist.

Eine derartige Ausbildung verhindert vorteilhaft einen axialen Versatz zwischen der optischen Ferrule und der zugehörigen optischen Gegenferrule. Außerdem weist eine derartige Ausbildung eine Unempfindlichkeit gegenüber Verunreinigungen im Bereich zwischen den Strahlformungsmitteln der optischen Ferrule und der zugehörigen optischen Gegenferrule auf. Der Durchmesser der parallelen Lichtstrahlen im Bereich zwischen zwei gegenüberliegenden Strahlformungsmitteln ist gegenüber dem Durchmesser der Lichtstrahlen im Lichtwellenleiter aufgeweitet (englisch: "expanded beam"). Der Störungseinfluss eines Verschmutzungspartikels ist im Fall eines aufgeweiteten Lichtstrahlbündel gegenüber einem nicht aufgeweiteten Lichtstrahlbündel entsprechend reduziert.

Unter einer optischen Ferrule wird hierbei und im Folgenden eine Komponente verstanden, welche einen axialen Endbereich einzelner Lichtwellenleiter jeweils aufnimmt und fixiert und in einem Steckvorgang mit einer zugehörigen optischen Gegenferrule den einzelnen Lichtwellenleiter relativ zu einem zugehörigen Gegenlichtwellenleiter der optischen Gegenferrule ausrichtet.

Die optische Ferrule kann aus einem optisch transparenten Material hergestellt sein, vorzugsweise aus einem optisch transparenten Kunststoff oder alternativ aus einem optisch transparenten Glas oder aus einem optisch transparenten anorganischen Material. Insbesondere eignet sich ein thermoplastischer Kunststoff und hierzu ganz besonders Polyetherimid (PEI). Daneben ist aber als alternativer thermoplastischer Kunststoff Polycarbonat (PC) oder Polystyrol (PS) anwendbar. Die drei genannten thermoplastischen Kunststoffe sind jeweils lichtdurchlässig und somit transparent im Spektralbereich des sichtbaren Lichtes und im vorzugsweise verwendeten Spektralbereich des infraroten Lichtes, der für die Übertragung des Lichtes in den einzelnen Wellenleitern, in der optischen Steckverbindung, in der optischen Ferrule und der zugehörigen optischen Gegenferrule jeweils typischerweise verwendet wird. Daneben zeichnen sich die drei genannten thermoplastischen Kunststoffe durch eine einfache und hochpräzise Herstellbarkeit in einem Kunststoffspritzgussprozess aus.

Die optische Ferrule ist vorzugsweise einteilig ausgebildet. In einer weniger bevorzugten Ausbildung kann die optische Ferrule auch mehrteilig ausgebildet sein und durch geeignete Präzisionsverbindungstechniken miteinander verbindbar sein. Die optische Ferrule weist vorzugsweise eine im Wesentlichen quaderförmige Grundgeometrie auf.

Die optische Ferrule kann wenigstens im Bereich der optisch aktiven Flächen der Strahlformungsmittel oder alternativ über die gesamte Oberfläche mit einer Antireflexbeschichtung beschichtet sein.

Der Lichtwellenleiter ist vorzugsweise als eine optische Faser und insbesondere als eine Faser aus Quarzglas, eine sogenannte optische Glasfaser, ausgebildet. Als optische Fasern sind sowohl Stufenindex- als auch Gradientenindexfasern möglich. Die optischen Fasern können sowohl mehrere Moden (so genannte optische Multimode-Fasern) als auch nur eine einzige Grund-Mode (so genannte optische Monomode-Faser) übertragen.

Die optische Ferrule kann wenigstens einen Lichtwellenleiter aufnehmen und diesen an einen Lichtwellenleiter einer zugehörigen Gegenferrule ausrichten. Für eine bidirektionale optische Übertragung insbesondere im Automobilbau können vorzugsweise zwei Lichtwellenleiter, 4 Lichtwellenleiter, 8 Lichtwellenleiter, 12 Lichtwellenleiter, 16 Lichtwellenleiterin oder 2·n Lichtwellenleiter in einer optische Ferrule aufgenommen werden (n ist herbei eine ganze positive Zahl). Für Spezialanwendungen ist in der optischen Ferrule aber auch eine ungerade Anzahl von Lichtwellenleitern aufnehmbar.

Der wenigstens eine Lichtwellenleiter wird in einem Fixierungsbereich der optischen Ferrule befestigt und jeweils durch die Befestigung in Richtung der Längsachse (bzw. der Steckrichtung) der optische Ferrule ausgerichtet. Im Fall von mehreren Lichtwellenleitern sind die einzelnen Lichtwellenleiter in einer zur Längsachsrichtung (bzw. Steckrichtung) orthogonal orientierten ersten Querrichtung bzw. ersten Querachsrichtung nebeneinander fixiert und jeweils parallel zur Längsachsrichtung (bzw. Steckrichtung) ausgerichtet. Um die optischen Achsen von zueinander gehörigen Lichtwellenleitern (und von zueinander gehörigen Strahlformungsmitteln) der optischen Ferrule und der optischen Gegenferrule zueinander auszurichten, können die Lichtwellenleiter im Fixierungsbereich und die Strahlformungsmittel im optischen Bereich jeweils vorzugsweise symmetrisch zur Längsachse der optischen Ferrule bzw. der optischen Gegenferrule angeordnet sein. Eine Erhöhung der anzubindenden Lichtwellenleiter lässt sich durch eine Anordnung der Lichtwellenleiter in beiden zweiten Querrichtungen (an der "oberen Seite" und an der "unteren Seite" der optischen Ferrule) verwirklichen. Eine weitere Erhöhung der Lichtwellenleiter lässt sich durch eine Anordnung der Lichtwellenleiter in mehreren Reihen bzw. Ebenen in beiden zweiten Querrichtungen, vorzugsweise in zwei Reihen bzw. zwei Ebenen, realisieren. Zur einfacheren Montage können die Lichtwellenleiter in den einzelnen Reihen bzw. Ebenen vorzugsweise jeweils seitlich versetzt angeordnet sein.

Der einzelne Lichtwellenleiter ist innerhalb des Fixierungsbereichs jeweils in einer zugehörigen Nut des Fixierungsbereichs eingefügt, welche jeweils in der Längsachsrichtung der optischen Ferrule an einer seitlichen Oberfläche der im Wesentlichen quaderförmigen optischen Ferrule ausgebildet ist. Der Lichtwellenleiter ist in einer axialen Richtung vorzugsweise derart an die Nut ausgerichtet, dass die Faserendfläche des Lichtwellenleiters die optische Ferrule am axialen Ende der Nut kontaktiert. In einer weniger bevorzugten Ausprägung kann die Faserendfläche des Lichtwellenleiters auch geringfügig vom axialen Ende der Nut beabstandet sein.

Das Querschnittsprofil der Nut ist vorzugsweise V-förmig oder alternativ U-Förmig ausgebildet, so dass sich der Lichtwellenleiter selbstfügend und selbstausrichtend in der Mitte der Nut einfindet und somit in einer Querrichtung der optischen Ferrule bzw. der Nut mittig zur Nut ausgerichtet ist. Der innere Kern des Lichtwellenleiters ist typischerweise in einem axialen Endabschnitt des Lichtwellenleiters vom Mantel, von der Schutzbeschichtung und von der äußeren Hülle freigelegt. Innerhalb der Nut ist vorzugsweise einzig der freigelegte innere Kern des Lichtwellenleiters eingelegt. Vorzugsweise schlägt der Lichtwellenleiter am kabelseitigen Ende der Nut mit dem Mantel, der Schutzbeschichtung und der äußeren Hülle an.

Die Fixierung des Wellenleiters in der zugehörigen Nut des Fixierungsbereichs erfolgt vorzugsweise mittels Klebens mit einem thermisch härtbaren Kleber, beispielsweise mit einem Kleber aus Epoxidharz und einem Härter, oder mit einem Zweikomponentenkleber, der unter Einwirkung eines UV-Lichtstrahls härtbar ist. Der Kleber ist vorzugsweise im Spektralbereich des sichtbaren Lichtes und im vorzugsweise verwendeten Spektralbereich des infraroten Lichtes lichtdurchlässig und somit transparent ausgebildet. Der Kleber umgibt vorzugsweise vollumfänglich den Lichtwellenleiter über die Längserstreckung der Nut und ermöglicht somit eine Fixierung des Lichtwellenleiters über die Längserstreckung der Nut an der Nut. Auf diese Weise wird ein Brechen des Kerns des Lichtwellenleiters bei vibrationsbedingten Spannungen und Drücken zwischen der optischen Ferrule und den einzelnen Lichtwellenleitern verhindert. Um ein unerwünschtes Brechen des an der Faserendfläche des Lichtwellenleiters abgestrahlten Lichts im Übergang zwischen dem Kleber und der optischen Ferrule im Fall einer von der optischen Ferrule beabstandeten Faserendfläche des Lichtwellenleiters zu verhindern, ist der Brechungsindex des Klebers vorzugsweise an den Brechungsindex der optischen Ferrule angepasst.

In der Steckrichtung der optischen Ferrule schließt sich an den Fixierungsbereich vorzugsweise unmittelbar der optische Bereich der optischen Ferrule an. Entsprechend der Anzahl von im Fixierungsbereich ausgebildeten Nuten zur Fixierung von jeweils einem Lichtwellenleiter ist im optischen Bereich eine entsprechende Anzahl von optischen Kanälen zugeordnet ausgebildet. Jedem optischen Kanal ist ein Strahlformungsmittel zugeordnet, die das vom Lichtwellenleiter abgestrahlte Licht von der in Steckrichtung eingangsseitigen optisch aktiven Fläche des Strahlformungsmittels bis zu der in Steckrichtung ausgangsseitigen optisch aktiven Fläche des Strahlformungsmittels aufweitet und an der ausgangsseitigen optisch aktiven Fläche ein aufgeweitetes und in Längsachsrichtung (bzw. in Steckrichtung) fokussiertes oder kollimiertes Lichtstrahlbündel abstrahlt. Das im optischen Bereich jeweils ausgebildeten Strahlformungsmittel ist vorzugsweise als eine Sammellinse ausgebildet und vorzugsweise einteilig mit dem Restkörper der optische Ferrule verwirklicht. Somit ist im optischen Bereich der optischen Ferrule für jede Sammellinse jeweils ein zugehöriger Teilbereich zugeordnet, der sich von einer zugehörigen eingangsseitigen optisch aktiven Fläche bis zu einer zugehörigen ausgangsseitigen optisch aktiven Fläche erstreckt. Die zugehörige eingangsseitige optische Fläche der im optischen Bereich jeweils realisierten Sammellinse bildet die Stirnfläche am axialen Ende der zur jeweiligen Sammellinse gehörigen Nut im Fixierungsbereich. Die zugehörige ausgangsseitige optische Fläche der im optischen Bereich jeweils realisierten Sammellinse bildet der in der Steckrichtung am axialen Ende des optischen Bereichs jeweils ausgebildete Stirnflächenbereich.

Die einzelne Sammellinse, welche auch als positive Linse bezeichnet werden kann, ist vorzugsweise als eine plankonvexe Sammellinse ausgebildet. Somit ist die eingangsseitige optisch aktive Fläche plan ausgeformt und die ausgangsseitige optisch aktive Fläche konvex gekrümmt. In einer weiteren Ausprägung kann die einzelne Sammellinse auch als eine konkav-konvexe Sammellinse ausgebildet sein. In diesem Fall ist die eingangsseitige optisch aktive Fläche konkav und die ausgangsseitige optisch aktive Fläche konvex gekrümmt.

Der Brechungsindex der optischen Ferrule und der Krümmungsradius der einzelnen ausgangsseitigen optisch aktiven Flächen der zu den einzelnen Sammellinsen jeweils gehörigen Teilbereiche des optischen Bereichs sind vorzugsweise derart ausgebildet, dass die Brennweite der einzelnen Sammellinsen jeweils in der Faserendfläche des jeweiligen Lichtwellenleiters zu liegen kommt. Denkbar ist aber auch, dass durch eine geeignete alternative Parametrierung des Brechungsindexes und des Krümmungsradius die Brennweite geringfügig zur Faserendfläche beabstandet entweder innerhalb des jeweiligen Lichtwellenleiters oder im zugehörigen zur jeweiligen Sammellinse gehörigen Teilbereich des optischen Bereiches zu liegen kommt.

Für eine optimierte Strahlführung im optischen Bereich der optischen Ferrule können die einzelnen konvex ausgebildeten optische aktiven Flächen am in Steckrichtung ausgangsseitigen Ende des optischen Bereichs vorzugsweise jeweils asphärisch, d. h. mit einer von der Krümmung einer Kugeloberfläche abweichenden Krümmung, ausgeformt sein.

Die Steckrichtung der optischen Ferrule erfolgt im Wesentlichen in der Längsachsrichtung der optischen Ferrule. Somit ist die Steckrichtung der optischen Gegenferrule, die entsprechend im Wesentlichen in der Längsachsrichtung der optischen Gegenferrule gerichtet ist, im Idealfall entgegengesetzt zur Steckrichtung der optischen Ferrule gerichtet. Im realen Fall kann ein rotatorischer Versatz zwischen der optischen Ferrule und der optischen Gegenferrule in den drei rotatorischen Freiheitsgraden und ein translatorischer Versatz zwischen den Längsachsen der optischen Ferrule und der optischen Gegenferrule in den drei translatorischen Freiheitsgraden einzig in einem minimalen Umfang auftreten.

Zum Ausrichten der Längsachsen der optischen Ferrule und der optischen Gegenferrule im Steckvorgang ist zwischen der optischen Ferrule und der optischen Gegenferrule eine Linearführung ausgebildet. Zur Ausbildung einer Linearführung mit der optischen Gegenferrule ist in der optischen Ferrule wenigstens ein Führungsbereich vorgesehen, der jeweils einen nutförmigen Teilabschnitt aufweist.

Der nutförmige Teilabschnitt der optischen Ferrule ist eingerichtet, sich an einen korrespondierenden rippenförmigen Teilabschnitt eines zugehörigen Gegenführungsbereiches der optischen Gegenferrule auszurichten.

In einer bevorzugten ersten Ausführungsform der optischen Ferrule können zwei Führungsbereiche vorgesehen sein, zwischen denen sich der optische Bereich mit allen darin ausgebildeten Strahlformungsmittel befindet. Die beiden Führungsbereiche sind hierbei jeweils in einer ersten Querrichtung seitlich benachbart zum optischen Bereich ausgebildet. Die Längsachsrichtung (bzw. Steckrichtung), die erste Querrichtung und die zweite Querrichtung sind jeweils zueinander orthogonal orientierte Erstreckungsrichtungen der optischen Ferrule. Die zweite Querrichtung ist hierbei die Richtung des Flächenvektors, welcher zu der im Folgenden noch zu erläuternden planaren ersten Führungsfläche jedes einzelnen Führungsbereichen gehört. Die beiden Führungsbereiche schließen sich unmittelbar und direkt seitlich an den optischen Bereich an. Insbesondere kann eine Seitenwand des zu den beiden Führungsbereichen jeweils gehörigen nutförmigen Teilabschnitts durch jeweils eine Seitenwand des optischen Bereichs gebildet sein. Darüber hinaus können die beiden Führungsbereiche auch seitlich benachbart zum Fixierungsbereich und zum noch zu erläuternden Aufnahmebereich ausgebildet sein.

In einer alternativen zweiten Ausführungsform der optischen Ferrule kann ein einziger Führungsbereich vorgesehen sein, der sich mittig entlang der Längsachse der optische Ferrule zwischen zwei Teilbereichen des optischen Bereichs befindet. Der nutförmige Teilabschnitt des einzigen Führungsbereichs ist unmittelbar und direkt seitlich zwischen den beiden Teilbereichen des optischen Bereichs ausgebildet. Insbesondere können die beiden Seitenwände des nutförmigen Teilabschnitts des einzigen Führungsbereichs durch jeweils eine Seitenwand der beiden Teilbereiche des optischen Bereichs gebildet sein. Die im optischen Bereich jeweils ausgebildeten Strahlformungsmittel sind auf die beiden Teilbereiche des optischen Bereiches verteilt, insbesondere gleichverteilt, ausgebildet. Darüber hinaus kann der einzelne Führungsbereich auch seitlich benachbart zum Fixierungsbereich und zum noch zu erläuternden Aufnahmebereich ausgebildet sein.

In einer alternativen dritten Ausführungsform der optischen Ferrule kann ein einziger Führungsbereich vorgesehen sein, der in der zweiten Querrichtung seitlich benachbart zum optischen Bereich und zum Fixierungsbereich ausgebildet ist. Somit ist der einzige Führungsbereich oberhalb des optischen Bereichs und des Fixierungsbereichs ausgebildet. Der nutförmige Teilabschnitt des einzigen Führungsbereichs ist zwischen zwei in der ersten Querrichtung der optischen Ferrule jeweils ausgebildeten Seitenwänden angeordnet.

Der nutförmige Teilabschnitt jedes Führungsbereichs und somit auch der rippenförmige Teilabschnitt des zugehörigen Gegenführungsbereichs weisen jeweils vorzugsweise ein rechteckförmiges Querschnittsprofil auf. Die Ausdehnung des rechteckförmigen Querschnittsprofils ist entlang der Längserstreckung des nutförmigen Teilabschnitts jedes Führungsbereichs und somit des rippenförmigen Teilabschnitts des zugehörigen Gegenführungsbereichs in einer vorzugsweisen Ausbildung jeweils konstant ausgeführt.

In einer weiteren Ausbildung kann sich der Abstand zwischen den beiden Seitenwänden des rechteckförmigen Querschnittsprofils des nutförmigen Teilabschnitts des Führungsbereichs der optischen Ferrule in einer zur Steckrichtung der optischen Ferrule entgegengesetzten Richtung verjüngen. Korrespondierend kann sich der Abstand zwischen den beiden Seitenwänden des rechteckförmigen Querschnittsprofils des rippenförmigen Teilabschnitts des zugehörigen Gegenführungsbereichs der optischen Gegenferrule in einer Steckrichtung der optischen Gegenferrule verjüngen. Die Verjüngung kann hierbei gestuft, linear oder gekrümmt ausgeführt sein. Durch eine derartige Ausbildung lässt sich zusätzlich zur Ausrichtungsfunktion eine Stopp-Funktion entlang der Längsachse der optischen Ferrule realisieren.

Im Fall eines einzigen Führungsbereiches sind die beiden Seitenwände des rippenförmigen Teilabschnitts des Gegenführungsbereiches der optischen Gegenferrule zwischen den beiden Seitenwänden des nutförmigen Teilabschnitts des Führungsbereiches der optischen Ferrule formschlüssig geführt. Im Fall von zwei Führungsbereichen sind die innenseitigen Seitenwände oder die außenseitigen Seitenwände der rippenförmigen Teilabschnitte der beiden Gegenführungsbereiche der optischen Gegenferrule jeweils zwischen den außenseitigen Seitenwänden bzw. den innenseitigen Seitenwänden der nutförmigen Teilabschnitte der beiden Führungsbereiche der optischen Ferrule formschlüssig geführt. In beiden Fällen sind die optische Ferrule und die optische Gegenferrule in beiden ersten Querrichtungen (positive erste Querrichtung und negative erste Querrichtung) jeweils zueinander ausgerichtet.

Neben den beiden Seitenwänden weist der nutförmige Teilabschnitt jedes Führungsbereichs der optischen Ferrule jeweils eine die beiden Seitenwände verbindende planare Grundfläche auf. Der rippenförmige Teilabschnitt jedes Gegenführungsbereichs der optischen Gegenferrule weist jeweils eine die beiden Seitenwände des rippenförmigen Teilabschnitts verbindende Deckfläche des rippenförmigen Teilabschnitts auf. Die Grundfläche des nutförmigen Teilabschnitts jedes Führungsbereichs der optischen Ferrule ist in einer zweiten Querrichtung, welche jeweils orthogonal zur Längsachsrichtung (bzw. zur Steckrichtung) und zur ersten Querrichtung orientiert ist, im Steckvorgang der optischen Ferrule und der optischen Gegenferrule an der Deckfläche des rippenförmigen Teilabschnitts des zugehörigen Gegenführungsbereichs der optischen Gegenferrule geführt. Somit sind die optische Ferrule und die optische Gegenferrule auch in der zweiten Querrichtung zueinander ausgerichtet.

Dadurch, dass jeder Führungsbereich, insbesondere der nutförmige Teilabschnitt jedes Führungsbereiches, der optischen Ferrule und der zugehörige Gegenführungsbereich, insbesondere der rippenförmige Teilabschnitt des zugehörigen Gegenführungsbereiches, der optischen Gegenferrule jeweils eine deutliche Längserstreckung aufweisen, wird ein Verdrehen oder ein Kippen der optischen Ferrule relativ zur optischen Gegenferrule um eine Achse in der ersten Querrichtung im gesteckten Zustand der optischen Ferrule und der optischen Gegenferrule verhindert.

Dadurch, dass die Seitenwände des wenigsten einen Führungsbereichs der optischen Ferrule an den Seitenwänden des zugehörigen Gegenführungsbereichs der optischen Gegenferrule im gesteckten Zustand der optischen Ferrule und der optischen Gegenferrule zueinander ausgerichtet sind, wird ein seitliches Verdrehen bzw. ein seitliches Verkippen der optischen Ferrule zur optischen Gegenferrule um eine Achse in der zweiten Querrichtung verhindert.

Die Quererstreckung eines einzigen Paares aus Führungsbereich und Gegenführungsbereich und insbesondere die symmetrische Anordnung von zwei Paaren aus Führungsbereich und Gegenführungsbereich relativ zur Längsachse der optischen Ferrule richtet die optische Ferrule und die optische Gegenferrule im Steckvorgang derart zueinander aus, dass im gesteckten Zustand die optische Gegenferrule relativ zur Längsachse der optischen Ferrule eine um 180° gedrehte Orientierung zur optischen Ferrule aufweist. Somit ist im gesteckten Zustand ein Verdrehen bzw. ein Verkippen der optischen Ferrule zur optischen Gegenferrule aus der genannten Ideallage um die Längsachse der optische Ferrule bzw. der optischen Gegenferrule verhindert.

Die fünf genannten Ausrichtungszustände der optischen Ferrule zur optischen Gegenferrule im gesteckten Zustand (zwei translatorische und drei rotatorische Ausrichtungszustände) ermöglichen, dass bei bestmöglicher Fertigungsgenauigkeit der optischen Ferrule bzw. der optischen Gegenferrule das von den Strahlformungsmitteln der optischen Ferrule und das von den Strahlformungsmitteln der optischen Gegenferrule jeweils fokussiert oder kollimiert abgestrahlte Licht jeweils vollständig ohne Lichtverlust auf dem zugehörigen Strahlformungsmittel der optischen Gegenferrule bzw. der optischen Ferrule auftrifft.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

In einer vorzugsweisen Weiterbildung der erfindungsgemäßen optischen Ferrule kann der wenigstens eine Führungsbereich jeweils zusätzlich einen rippenförmigen Teilabschnitt aufweisen, der sich an den nutförmigen Teilabschnitt in der Steckrichtung axial anschließt. Der rippenförmige Teilabschnitt der einzelnen Führungsbereiche ist eingerichtet, sich jeweils mit einem nutförmigen Teilabschnitt des zugehörigen Gegenführungsbereichs auszurichten.

Da die Längserstreckung des rippenförmigen Teilabschnitts jedes Führungsbereichs der Längserstreckung des nutförmigen Teilabschnitts jedes Führungsbereichs entspricht, wird durch eine derartige technische Maßnahme die Längserstreckung der optischen Ferrule verdoppelt. Die Verlängerung der Ferrule ermöglicht bei gegebener Fertigungsgenauigkeit der optischen Ferrule im gesteckten Zustand eine Verringerung des Verdrehens bzw. des Verkippens zwischen der optischen Ferrule und der optischen Gegenferrule relativ zur Achse in der ersten Querrichtung.

Die Ausbildung von Führungsbereichen mit jeweils einem nutförmigen Teilabschnitt und einem sich in der Steckrichtung axial anschließenden rippenförmigen Teilabschnitt in der optischen Ferrule bzw. in der optischen Gegenferrule ermöglicht vorteilhaft die Realisierung einer hermaphrodit ausgeführten mechanischen Schnittstelle der optischen Ferrule. Eine hermaphrodit ausgeführte mechanischen Schnittstelle der optische Ferrule ist identisch zur hermaphrodit ausgeführten mechanischen Schnittstelle der optischen Gegenferrule ausgebildet. Eine hermaphrodit ausgeführte mechanischen Schnittstelle der optische Ferrule und eine ebenfalls hermaphrodit ausgeführte mechanischen Schnittstelle der optische Gegenferrule sind in jeweils zueinander entgegengesetzt gerichteten Steckrichtungen miteinander steckbar. Die hermaphrodit ausgeführte mechanische Schnittstellen der optischen Ferrule und der optischen Gegenferrule sind hierbei im Steckvorgang um 180° in Relation zur gemeinsamen Längsachse gedreht zueinander orientiert. Ist zusätzlich der Aufnahmebereich, der Fixierungsbereich und der optischen Bereiche der optischen Ferrule und der optischen Gegenferrule jeweils symmetrisch zur jeweiligen Längsachse ausgeführt, so sind die optische Ferrule und die optische Gegenferrule identisch ausgebildet. Die Herstellungskosten für eine optische Steckverbindung sind durch eine derartige Verwendung von Gleichteilen reduziert.

Die Grundfläche des nutförmigen Teilabschnitts und die Deckfläche des sich an den nutförmigen Teilabschnitt axial anschließenden rippenförmigen Teilabschnitt jedes Führungsbereiches können entweder stufenlos (erste und zweite Ausführungsform der optischen Ferrule) oder gestuft (dritte Ausführungsform der optischen Ferrule) ineinander übergehen. Die Grundfläche des nutförmigen Teilabschnitts und die Deckfläche des sich axial anschließenden rippenförmigen Teilabschnitts jedes Führungsbereichs der optischen Ferrule können folglich jeweils eine planare Führungsfläche bilden, die hierbei und im Folgenden als eine planare erste Führungsfläche bezeichnet wird. Der Flächenvektor jeder planaren ersten Führungsfläche ist in die zweite Querrichtung gerichtet. Somit kann im Steckvorgang jede planare erste Führungsfläche der optischen Ferrule an der zugehörigen planaren ersten Gegenführungsfläche der optischen Gegenferrule bereits ab dem vorderen axialen Ende und entlang der gesamten Längserstreckung des jeweiligen Gegenführungsbereichs geführt werden und somit bestmöglich ausgerichtet werden.

Die planare erste Führungsfläche jedes Führungsbereichs und die optische Achse jedes Strahlformungsmittels und/oder der axialen Endabschnitte jedes Lichtwellenleiters können in einer ersten Schnittebene der optischen Ferrule liegen (erste und zweite Ausführungsform der optischen Ferrule). Alternativ können die planaren ersten Führungsflächen des nutförmigen Teilabschnitts und des rippenförmigen Teilabschnitts jedes Führungsbereichs jeweils parallel zur ersten Schnittebene in jeweils einer unterschiedlichen Ebene liegen (dritte Ausführungsform der optischen Ferrule). Für den Fall, dass die optischen Achsen jedes Strahlformungsmittels und/oder der axialen Endabschnitte jedes Lichtwellenleiters jeweils in einer einzigen Ebene bzw. einer einzigen Reihe liegen, kann die erste Schnittebene durch die optischen Achsen jedes Strahlformungsmittels und/oder der axialen Endabschnitte jedes Lichtwellenleiters aufgespannt sein. Alternativ können die Lichtwellenleiter an der Oberseite und der Unterseite der optischen Ferrule fixiert sein und somit die optischen Achsen jedes Strahlformungsmittels und/oder der axialen Endabschnitte jedes Lichtwellenleiters an der Unterseite der optischen Ferrule jeweils symmetrisch zu den optischen Achsen jedes Strahlformungsmittels und/oder der axialen Endabschnitte jedes Lichtwellenleiters an der Oberseite der optischen Ferrule angeordnet sein. In diesem Fall kann die erste Schnittebene durch eine Symmetrieebene der optischen Achsen jedes Strahlformungsmittels und/oder der axialen Endabschnitte jedes Lichtwellenleiters gebildet sein. Da zusätzlich die einzelnen planaren ersten Führungsflächen der optische Ferrule auf den zugehörigen planaren ersten Gegenführungsflächen der optischen Gegenferrule gleiten, ist somit sichergestellt, dass die optischen Achsen der Strahlformungsmittel der optischen Ferrule und die zugehörigen Strahlformungsmittel der optischen Gegenferrule jeweils zueinander ausgerichtet sind. Im gesteckten Zustand entspricht die erste Schnittebene der optischen Ferrule der ersten Schnittebene der optischen Gegenferrule, wodurch eine verlustfreie optische Signalübertragung zwischen der optischen Ferrule und der optischen Gegenferrule möglich ist.

Im Fall von zwei Führungsbereichen der optischen Ferrule können zur Erhöhung der mechanischen Stabilität die rippenförmigen Teilabschnitte der beiden Führungsbereiche vorzugsweise am jeweiligen Rippengrund über eine unmittelbare Verbindung, insbesondere über einen den gesamten Bereich zwischen den rippenförmigen Teilabschnitten ausfüllenden plattenförmigen Bereich, miteinander verbunden sein. Denkbar ist aber auch eine Ausprägung der optischen Ferrule, bei der keine unmittelbare mechanische Verbindung zwischen den beiden rippenförmigen Teilabschnitten vorgesehen ist.

Die optische Ferrule kann vorzugsweise in einem in der Steckrichtung der optischen Ferrule vorderen Endabschnitt der planaren ersten Führungsfläche jedes rippenförmigen Teilabschnitts jeweils eine Zentrierfläche ausgebildet sein, welche hierbei und im Folgenden als erste Zentrierfläche bezeichnet ist. Die erste Zentrierfläche kann als eine Fase zwischen der planaren ersten Führungsfläche und der axialen Stirnfläche des rippenförmigen Teilabschnitts jedes Führungsbereich der optischen Ferrule ausgebildet sein. Durch die erste Zentrierfläche erfolgt im Steckvorgang im Erstkontakt zwischen der optischen Ferrule und der optischen Gegenferrule eine erste grobe Zentrierung. Die erste grobe Zentrierung bewirkt, dass bei einem zu geringen Abstand zwischen den Längsachsen der optischen Ferrule und der optischen Gegenferrule die optische Ferrule und die optische Gegenferrule derart weit voneinander entfernt werden, bis der Idealabstand zwischen den Längsachsen der optischen Ferrule und der optischen Gegenferrule im gesteckten Zustand erreicht ist.

Der nutförmige Teilabschnitt und der rippenförmige Teilabschnitt jedes Führungsbereichs der optischen Ferrule sind mit einer derartigen Fertigungsgenauigkeit hergestellt, dass ein axiales Führen und somit ein axiales Bewegen zwischen jedem Führungsbereich der optischen Ferrule und dem zugehörigen Gegenführungsbereich der optischen Gegenführungsbereich der optischen Gegenferrule möglich ist. Die optische Ferrule und die optische Gegenferrule sind also derart genau gefertigt, dass ein für die gegenseitige Steckbewegung erforderliches geringstmögliches Spiel zwischen dem wenigstens einen Führungsbereichen und dem zugehörigen Gegenführungsbereich vorliegen kann. Zur exakten Ausrichtung der optischen Ferrule und der optischen Gegenferrule im gesteckten Zustand ist eine Feinzentrierung zwischen der optischen Ferrule und der optischen Gegenferrule erforderlich:
Zur Feinzentrierung zwischen der optischen Ferrule und der optischen Gegenferrule in der zweiten Querrichtung kann in einer weiteren vorzugsweisen Ausbildung der optischen Ferrule aus der planaren ersten Führungsfläche im nutförmigen Teilabschnitt jedes Führungsbereich jeweils eine erste Zentrierstütze, vorzugsweise jeweils eine einzige erste Zentrierstütze, herausragen. Die erste Zentrierstütze kann jeweils in einem Flächenbereich des nutförmigen Teilabschnitts des jeweiligen Führungsbereichs ausgebildet sein, der vom rippenförmigen Teilabschnitt des zugehörigen Gegenführungsbereichs der optischen Gegenferrule erst im vollständig gesteckten Zustand erreicht wird. Somit kommt es erst im vollständig gesteckten Zustand und damit am Ende der Steckbewegung zwischen der optischen Ferrule und der optischen Gegenferrule zu einer Berührung zwischen der einzelnen ersten Zentrierstütze der optischen Ferrule und der gegenüberliegenden planaren ersten Gegenführungsfläche der optischen Gegenferrule. Die erste Zentrierstütze jedes Führungsbereiches der optischen Ferrule kann sich somit auf derselben in der zweiten Querrichtung gerichteten Schnittlinie der optischen Ferrule befinden. Die erste Zentrierstütze kann somit vorzugsweise gegenüber der Ausdehnung der zugehörigen planaren ersten Führungsfläche kleinflächig ausgebildet sein und kann vorzugsweise nur eine geringe Erstreckung in Richtung des Flächenvektors der zugehörigen planaren ersten Führungsfläche aufweisen.

Für die Feinzentrierung zwischen der optischen Ferrule und der optischen Gegenferrule in der zweiten Querrichtung kann eine Positioniergenauigkeit von vorzugsweise kleiner als 800 um realisierbar sein.

In einer vorzugsweisen Weiterbildung der optischen Ferrule kann jeder Führungsbereich im nutförmigen Teilabschnitt und im rippenförmigen Teilabschnitt jeweils wenigstens eine planare zweite Führungsfläche aufweisen, welche jeweils orthogonal zur zugehörigen planaren ersten Führungsfläche orientiert ist. Im Fall eines einzigen Führungsbereichs können die beiden Seitenwände des nutförmigen Teilabschnitts und des rippenförmigen Teilabschnitts jeweils als eine planare zweite Führungsfläche ausgebildet sein. Im Fall von zwei Führungsbereichen, die symmetrisch zur Längsachse ausgebildet sein können, können entweder die außenseitige Seitenwand des nutförmigen Teilabschnitts und des rippenförmigen Teilabschnitts oder alternativ die innenseitige Seitenwand des nutförmigen Teilabschnitts und des rippenförmigen Teilabschnitts jedes Führungsbereiches jeweils als eine planare zweite Führungsfläche ausgebildet sein. Die wenigstens eine planare zweite Führungsfläche jedes Führungsbereichs der optischen Ferrule bildet mit der planaren zweiten Gegenführungsfläche des zugehörigen Gegenführungsbereichs der optischen Gegenferrule im Steckvorgang eine Ausrichtung zwischen der optischen Ferrule und der optischen Gegenferrule in der ersten Querrichtung.

Bevorzugt kann sich in jedem Führungsbereich der optischen Ferrule jeweils die wenigstens eine planare zweite Führungsfläche des nutförmigen Teilabschnitts relativ zur zugehörigen planaren ersten Führungsfläche in einer entgegengesetzten Richtung zu der wenigstens einen planaren zweiten Führungsfläche des rippenförmigen Teilabschnitts erstrecken. Im gesteckten Zustand können somit auf der einen Seite der ersten Schnittebene die Linearführungspaare aus dem wenigsten einen nutförmigen Teilabschnitt der optischen Ferrule und den zugehörigen rippenförmigen Teilabschnitt der optischen Gegenferrule und auf der anderen Seite der ersten Schnittebene die Linearführungspaare aus dem wenigstens einen rippenförmigen Teilabschnitt der optischen Ferrule und den zugehörigen nutförmigen Teilabschnitt der optischen Gegenferrule angeordnet sein.

In einer weiteren vorzugsweisen Ausbildung der optischen Ferrule kann in einem in der Steckrichtung vorderen Endabschnitt der planaren zweiten Führungsfläche jedes rippenförmigen Teilabschnitts jeweils eine Zentrierfläche ausgebildet sein, welche hierbei und im Folgenden als zweite Zentrierfläche bezeichnet ist. Die zweite Zentrierfläche kann als eine Fase zwischen der planaren zweiten Führungsfläche und der axialen Stirnfläche des rippenförmigen Teilabschnitts jedes Führungsbereichs der optischen Ferrule ausgebildet sein. Im Erstkontakt des rippenförmigen Teilabschnitts des wenigstens einen Führungsbereichs der optischen Ferrule mit einem nutförmigen Teilabschnitt eines zugehörigen Gegenführungsbereichs der optischen Gegenferrule während des Steckvorgangs ist somit eine grobe Zentrierung zwischen der optischen Ferrule und der optischen Gegenferrule in den beiden ersten Querrichtungen (positive erste Querrichtung und negative erste Querrichtung) möglich. Die zweite Zentrierfläche kann vorzugsweise als eine Fase an einer außenseitigen planaren zweiten Führungsfläche des rippenförmigen Teilabschnitts des einzelnen Führungsbereichs der optischen Ferrule ausgebildet sein. Alternativ oder ergänzend kann die zweite Zentrierfläche auch als eine Fase an einer innenseitigen planaren zweiten Führungsfläche des rippenförmigen Teilabschnitts des einzelnen Führungsbereichs der optischen Ferrule ausgebildet sein.

Außerdem kann in einer weiteren vorzugsweisen Ausbildung der optischen Ferrule in einem in der Steckrichtung vorderen Endabschnitt der planaren zweiten Führungsfläche jedes nutförmigen Teilabschnitts jeweils eine Zentrierfläche ausgebildet sein, welche hierbei und im Folgenden als dritte Zentrierfläche bezeichnet ist. Während des Steckvorgangs der optischen Ferrule und der optischen Gegenferrule kommt es zwischen den an der optischen Ferrule jeweils ausgebildeten zweiten Zentrierflächen und den zugehörigen an der optischen Gegenferrule jeweils ausgebildeten dritten Zentrierflächen zu einem Erstkontakt zwischen der optischen Ferrule und der optischen Gegenferrule. Durch das aneinander Gleiten der zweiten Zentrierflächen und der dritten Zentrierflächen während des Steckvorgangs kommt es somit zu einer Grobzentrierung zwischen der optischen Ferrule und der optischen Gegenferrule in den beiden ersten Querrichtungen.

Vorzugsweise können die dritten Zentrierflächen jeweils als eine Fase an einer außenseitigen planaren zweiten Führungsfläche des nutförmigen Teilabschnitts eines Führungsbereichs der optischen Ferrule ausgebildet sein. Im Fall eines einzigen Führungsbereiches können die beiden dritten Zentrierflächen jeweils als eine Fase zwischen einem in der Steckrichtung vorderen Endabschnitt einer planaren zweiten Führungsfläche des nutförmigen Teilabschnitts des einzigen Führungsbereichs und der Stirnfläche des angrenzenden Teilbereichs des optischen Bereichs bzw. einer sich lateral anschließenden Seitenwand ausgebildet sein. Im Fall von zwei Führungsbereichen können die beiden dritten Zentrierflächen jeweils als eine Fase zwischen einem in der Steckrichtung vorderen Endabschnitt einer planaren zweiten Führungsfläche des nutförmigen Teilabschnitts eines Führungsbereichs und der Stirnfläche eines sich an den jeweiligen Führungsbereich lateral anschließenden Seitenwand ausgebildet sein.

In Analogie zu den zweiten Zentrierflächen können die dritten Zentrierflächen auch alternativ oder ergänzend jeweils als eine Fase an innenseitigen planaren zweiten Führungsflächen des wenigstens einen Führungsbereichs der optischen Ferrule ausgeführt sein.

Zur Feinausrichtung zwischen der optischen Ferrule und der optischen Gegenferrule in den beiden ersten Querrichtungen können vorzugsweise aus jeder planaren zweiten Führungsfläche im nutförmigen Teilabschnitt jedes Führungsbereich jeweils eine Zentrierstütze hervorragen, welche hierbei und im Folgenden als zweite Zentrierstütze bezeichnet wird.

Äquivalent zur ersten Zentrierstütze kann die zweite Zentrierstütze jeweils in einem Flächenbereich des nutförmigen Teilabschnitts des jeweiligen Führungsbereichs ausgebildet sein, der vom rippenförmigen Teilabschnitt des zugehörigen Gegenführungsbereichs der optischen Gegenferrule erst im vollständig gesteckten Zustand erreicht wird. Somit kommt es erst im vollständig gesteckten Zustand zu einer Berührung zwischen der einzelnen zweiten Zentrierstütze der optischen Ferrule und der gegenüberliegenden planaren zweiten Gegenführungsfläche der optischen Gegenferrule. Auf jeder planaren zweiten Führungsfläche kann vorzugsweise nur eine einzige zweite Zentrierstütze ausgebildet sein.

Die zweite Zentrierstütze jedes Führungsbereiches der optischen Ferrule kann sich somit auf derselben in der ersten Querrichtung gerichteten Schnittlinie der optischen Ferrule befinden. Insbesondere können die ersten Zentrierstützen und die zweiten Zentrierspitzen vorzugsweise auf einer gemeinsamen zweiten Schnittebene der optischen Ferrule liegen. Die zweite Schnittebene der optischen Ferrule ist hierbei orthogonal zur ersten Schnittebene der optischen Ferrule orientiert. Hinsichtlich der Ausdehnung der zweiten Zentrierstützen gilt das obig zur ersten Zentrierfläche Gesagte analog. Alternativ kann auch ein Teil der ersten oder der zweiten Zentrierflächen der optischen Ferrule nicht auf der zweiten Schnittebene, insbesondere in einem der zweiten Schnittebene in der Steckrichtung vorgelagerten axialen Abschnitt der optischen Ferrule, ausgebildet sein.

In einer weiteren vorzugsweisen Ausprägung der optischen Ferrule können in der optischen Ferrule in der ersten Querrichtung seitlich benachbart zu jedem Strahlformungsmittel oder zu jedem Führungsbereich wenigstens ein Zentriermittel ausgebildet sein. Vorzugsweise können in der optischen Ferrule in jeder der beiden ersten Querrichtungen jeweils unmittelbar an die beiden Führungsbereiche oder alternativ unmittelbar an den optischen Bereich im Fall eines einzigen Führungsbereichs jeweils ein Zentriermittel ausgebildet sein. In einer weniger bevorzugten Ausführungsform einer Zentrierung kann auch ein einziges Zentriermittel mittig zur Längsachse zwischen zwei Teilbereichen des optischen Bereichs ausgebildet sein.

Im einzelnen Zentriermittel kann jeweils wenigstens eine weiteren Zentrierfläche ausgebildet sein, welche jeweils eine erste Richtungskomponente in der Steckrichtung und eine zweite Richtungskomponente in einer zu einem Flächenvektor der planaren ersten Führungsfläche entgegengesetzten Richtung aufweist.

Das einzelne Zentriermittel der optischen Ferrule wirkt mit einem zugehörigen Gegenzentriermittel der optischen Gegenferrule derart zusammen, dass im Steckvorgang jede Zentrierfläche der einzelnen Zentriermittel der optischen Ferrule an wenigstens einer Gegenzentrierfläche eines zugehörigen Gegenzentriermittels der optischen Gegenferrule entlanggleitet. Hierbei wird der Abstand zwischen der optischen Ferrule und der optischen Gegenferrule in der zweiten Querrichtung zunehmend reduziert, bis im gesteckten Zustand jede planare erste Führungsfläche der optische Ferrule an der zugehörigen planaren ersten Gegenführungsfläche der optischen Gegenferrule ausgerichtet ist. Im gesteckten Zustand bilden die einzelnen Zentriermittel im Zusammenwirken mit den zugehörigen Gegenzentriermitteln zusätzlich eine Stopfunktion in der Steckrichtung.

Vorzugsweise sind am einzelnen Zentriermittel jeweils zwei Zentrierflächen ausgebildet, wobei die in der Steckrichtung axial vorgelagert ausgebildete Zentrierfläche hierbei und im Folgenden als vierte Zentrierfläche und die in der Steckrichtung axial nachgelagert ausgebildete Zentrierfläche hierbei und im Folgenden als fünfte Zentrierfläche bezeichnet wird. Konsequenterweise sind am einzelnen Gegenzentriermittel jeweils vorzugsweise zwei Gegenzentrierflächen ausgebildet, wobei die in der Gegensteckrichtung axial vorgelagerte Gegenzentrierfläche hierbei und im Folgenden als vierte Gegenzentrierfläche und die in der Gegensteckrichtung axial nachgelagerte Gegenzentrierfläche hierbei und im Folgenden als fünfte Gegenzentrierfläche bezeichnet wird.

Das aneinander Gleiten der vierte Zentrierfläche jedes Zentriermittels an der vierten Gegenzentrierfläche des zugehörigen Gegenzentriermittels bewirkt eine Grobzentrierung zwischen der optischen Ferrule und der optischen Gegenferrule in der zweiten Querrichtung. Die Feinzentrierung zwischen der optischen Ferrule und der optischen Gegenferrule in der zweiten Querrichtung erfolgt schließlich durch das aneinander Gleiten der fünften Zentrierfläche jedes Zentriermittels an der fünften Gegenzentrierfläche des zugehörigen Gegenzentriermittels. Für die Grobzentrierung kann ein Winkel zwischen dem Flächenvektor der vierten Zentrierfläche und der Steckrichtung vorzugsweise zwischen 50° und 70° und idealerweise bei 60° liegen. Für die Feinzentrierung kann ein Winkel zwischen dem Flächenvektor der fünften Zentrierfläche und der Steckrichtung im Hinblick auf eine optimale Kraftumlenkung zwischen der für den Steckvorgang in Steckrichtung einzuleitenden Steckkraft und der Ausrichtungskraft in der zweiten Querrichtung idealerweise bei 45° liegen. Nutzt man eine Selbsthemmung zwischen den fünften Zentrierflächen und den zugehörigen fünften Gegenzentrierflächen aus, so kann ein Winkel zwischen dem Flächenvektor der fünften Zentrierfläche und der Steckrichtung auch größer als 45° sein.

Die Erfindung betrifft auch einen optischen Steckerverbinder zum Schließen bzw. zum Trennen einer optischen Verbindung mit wenigstens einem Lichtwellenleiter. Der optische Steckverbinder weist ein Steckverbindergehäuse auf, das vorzugsweise über eine Rastverbindung oder alternativ über eine Schraub- oder eine Bajonett-Verbindung mit einem Gegensteckverbindergehäuses eines Gegensteckverbinders verbindbar ist. Vorzugsweise ist die optische Ferrule im Steckverbindergehäuse des optischen Steckverbinders schwimmend gelagert, während die optische Gegenferrule im Gegensteckverbindergehäuse des optischen Gegensteckverbinders fixiert gelagert ist. Alternativ können die optische Ferrule und die optische Gegenferrule im Steckverbindergehäuse des optischen Steckverbinders bzw. im Gegensteckverbindergehäuse des optischen Gegensteckverbinders jeweils schwimmend gelagert sein.

Zur schwimmenden Lagerung der optischen Ferrule im optischen Steckverbinder ist in einer axialen Durchführung des Steckverbindergehäuse die optische Ferrule steckseitig und eine mit der optische Ferrule axial verbundene Feder kabelseitig angeordnet. Die schwimmende Lagerung der optischen Ferrule in der lateralen Richtung ist durch einen umlaufenden Luftspalt zwischen der optischen Ferrule und der Innenwand der Durchführung verwirklicht. Die schwimmende Lagerung der optischen Ferrule in der axialen Richtung erfolgt dadurch, dass die optische Ferrule durch die Federkraft der vorgespannt gelagerten Feder gegen eine Stufe der Durchführung gedrückt wird. Im gesteckten Zustand der optischen Ferrule und der optischen Gegenferrule löst sich die optische Ferrule von der Stufe. Die erhöhte Federkraft der zusätzlich vorgespannten Feder übt eine ausreichende Steckkraft auf das ineinander gesteckte Paar aus der optischen Ferrule und der optischen Gegenferrule aus. Damit die Feder vorzugsweise eine Kraft in Längsachsrichtung (bzw. in Steckrichtung) in die optische Ferrule einleiten kann, ist an der Feder eine in der Steckrichtung planare Stirnfläche, wie beispielsweise bei einer Blattfeder, einer Spiralfeder oder einem Elastomerelement, ausgebildet.

In der Durchführung des Steckverbindergehäuses ist steckseitig eine mechanische Schnittstelle ausgebildet, welche mit einer mechanischen Gegenschnittstelle des optischen Gegensteckverbinders zusammenwirkt, welche steckseitig in einer axialen Durchführung des Gegensteckverbindergehäuse ausgebildet ist. Die mechanische Schnittstelle kann vorzugsweise stiftförmig ausgebildet sein und in eine buchsenförmig ausgeführte mechanische Gegenschnittstelle einführbar sein. Alternativ kann die mechanische Schnittstelle aber auch buchsenförmig und die mechanische Gegenschnittstelle stiftförmig ausgeführt sein.

Kabelseitig ist ein Kabel in die Durchführung des Steckverbindergehäuses des optische Steckverbinders eingeführt und über ein Klemmmittel am Steckverbindergehäuse fixiert. Das Kabel enthält die Lichtwellenleiter, die mit der optischen Ferrule verbunden sind. Das Klemmmittel kann einteilig mit dem Steckverbindergehäuse ausgebildet sein oder eine separate Komponente zum Steckverbindergehäuse darstellen. Die Klemmung kann kraft-, form- oder stoffschlüssig erfolgen. Alternativ können die einzelnen Lichtwellenleiter auch separat ohne Kabel zum optischen Steckverbinder geführt sein und über ein zugehöriges Klemmmittel am Steckverbindergehäuse des optischen Steckverbinder fixiert sein.

Eine derartige Ausbildung eines optischen Steckverbinders mit einer in Steckrichtung wirkenden Feder und einer optischen Ferrule vereinfacht den Aufbau und die technische Funktionsweise des optischen Steckverbinder erheblich. In Abgrenzung zu herkömmlichen optischen Linsensteckverbindern ist keine separate Kabelfesthaltung außerhalb des optischen Steckverbinders, insbesondere keine schräg zur Längsachsrichtung ausgebildete und wirkende Kabelfesthaltung, erforderlich. Die auf die optische Ferrule wirkende Federkraft kann hinsichtlich ihrer Richtung und ihrer Größe präziser durch die Auslegung der innerhalb des optischen Steckverbinders angeordneten Feder eingestellt werden.

Die hinsichtlich der optischen Ferrule obig genannten technischen Merkmale, technischen Wirkungen und technischen Vorteile gelten äquivalent auch für den optischen Steckverbinder.

Die Erfindung betrifft schließlich auch eine optische Steckverbindung aus einem optischen Steckverbinder und einem zugehörigen optischen Gegensteckverbinder. Der optische Gegensteckverbinder weist eine optische Gegenferrule und ein die optische Gegenferrule aufnehmendes Gegensteckverbindergehäuse auf, das mit dem Steckverbindergehäuse des optischen Steckverbinders verbindbar ist. Die optische Ferrule und die optische Gegenferrule sind optisch und mechanisch miteinander gekoppelt, indem im nutförmigen Teilabschnitt jedes Führungsbereichs der optischen Ferrule der rippenförmige Teilabschnitt des zugehörigen Gegenführungsbereichs der optischen Gegenferrule aufgenommen ist.

Eine derartige optische Steckverbindung ist durch einen einfachen mechanischen Führungsmechanismus und durch eine einfache optische Kopplung zwischen einer optischen Ferrule und einer optischen Gegenferrule gekennzeichnet. Auf diese Weise lässt sich ein sicheres und präzises Stecken zwischen einem optischen Steckverbinder und einem zugehörigen optischen Gegensteckverbinder bei reduzierten optischen Verlusten verwirklichen.

Die hinsichtlich der optischen Ferrule und dem optischen Steckverbinder jeweils obig genannten technischen Merkmale, technischen Wirkungen und technischen Vorteile gelten äquivalent auch für die optische Steckverbindung.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1A,1B,1C: eine isometrische Darstellung, eine Drauficht und eine Seitenansicht einer ersten Ausführungsform einer erfindungsgemäßen optischen Ferrule,
- Fig. 1D,1E,1F: eine Draufsicht, eine Seitenansicht und eine Längsschnittdarstellung einer ersten Ausführungsform von optischer Ferrule und optischer Gegenferrule im nicht gesteckten Zustand,
- Fig. 1G,1H,1I: eine Draufsicht, eine Seitenansicht und eine Längsschnittdarstellung einer ersten Ausführungsform von optischer Ferrule und optischer Gegenferrule im gesteckten Zustand,
- Fig. 1J,1K: eine erste und eine zweite Querschnittsdarstellung einer ersten Ausführungsform von optischer Ferrule und optischer Gegenferrule im gesteckten Zustand,
- Fig. 1L,1M: eine isometrische Darstellung einer ersten Ausführungsform von optischer Ferrule und optischer Gegenferrule im nicht gesteckten und im gesteckten Zustand,
- Fig. 2A,2B: eine isometrische Darstellung und eine Seitenansicht einer weiteren Ausführungsform einer Zentrierung für eine erfindungsgemäße optische Ferrule,
- Fig. 2C,2D: eine Draufsicht von optischer Ferrule und optischer Gegenferrule mit einer weiteren Ausführungsform einer Zentrierung im nicht gesteckten und im gesteckten Zustand,
- Fig. 3A,3B,3C: eine isometrische Darstellung, eine Draufsicht und eine Seitenansicht einer zweiten Ausführungsform einer erfindungsgemäßen optischen Ferrule,
- Fig. 4A,4B,4C: eine isometrische Darstellung, eine Draufsicht und eine Seitenansicht einer dritten Ausführungsform einer erfindungsgemäßen optischen Ferrule und
- Fig. 5A,5B: eine Längsschnittdarstellung einer optischen Steckverbindung mit einer erfindungsgemäßen optischen Ferrule im nicht gesteckten und im gesteckten Zustand.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

### BESCHREIBUNG VON AUSFÜHRUNGSBEISPIELEN

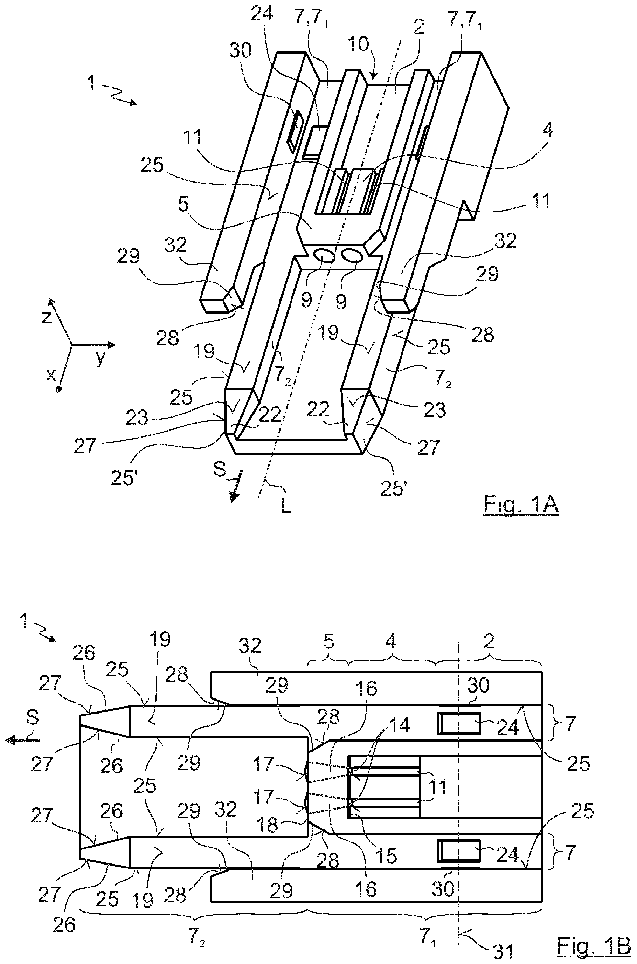

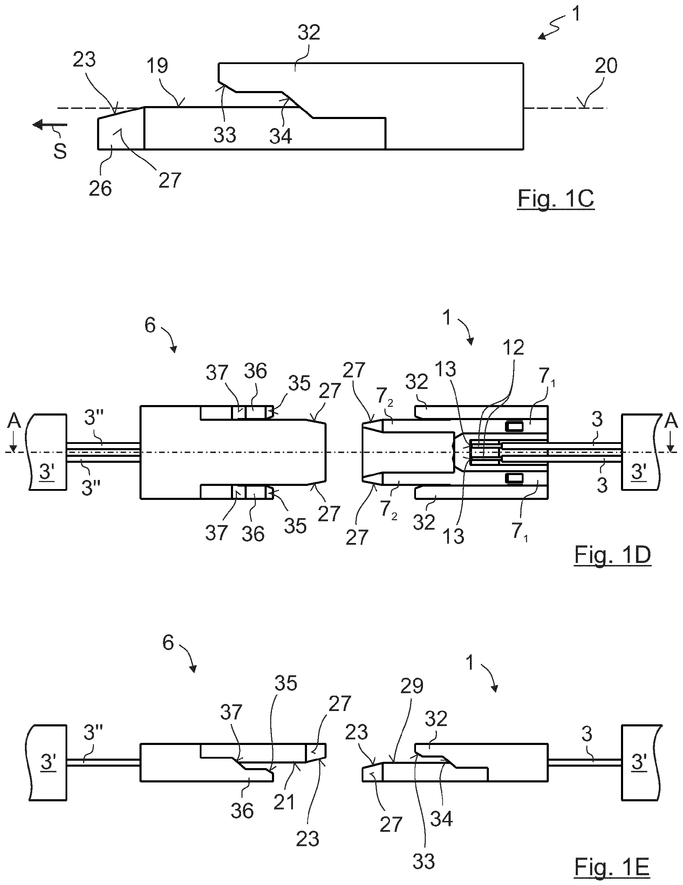

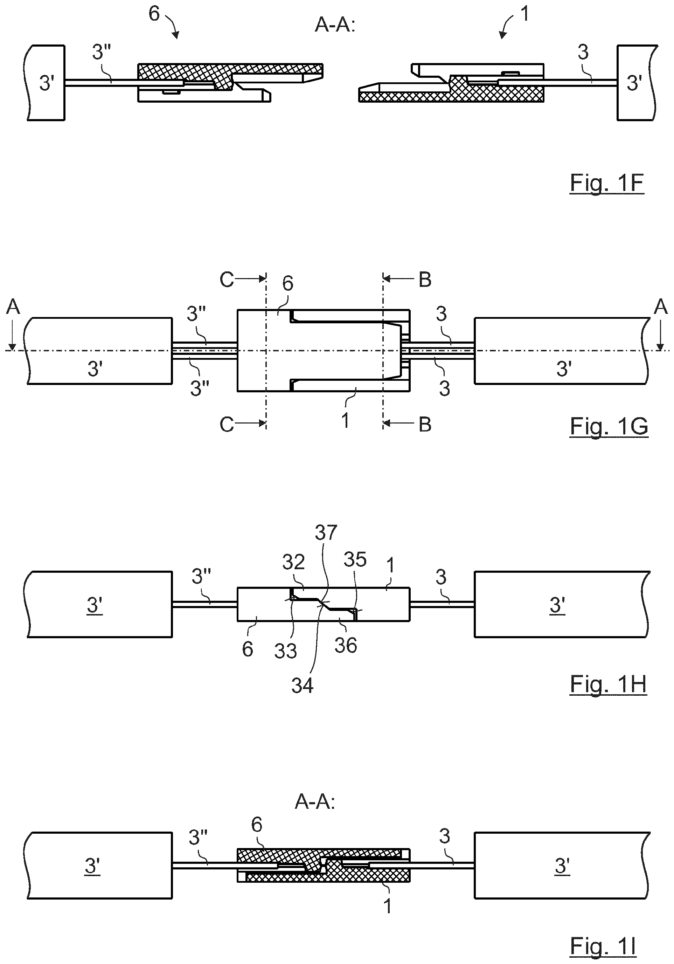

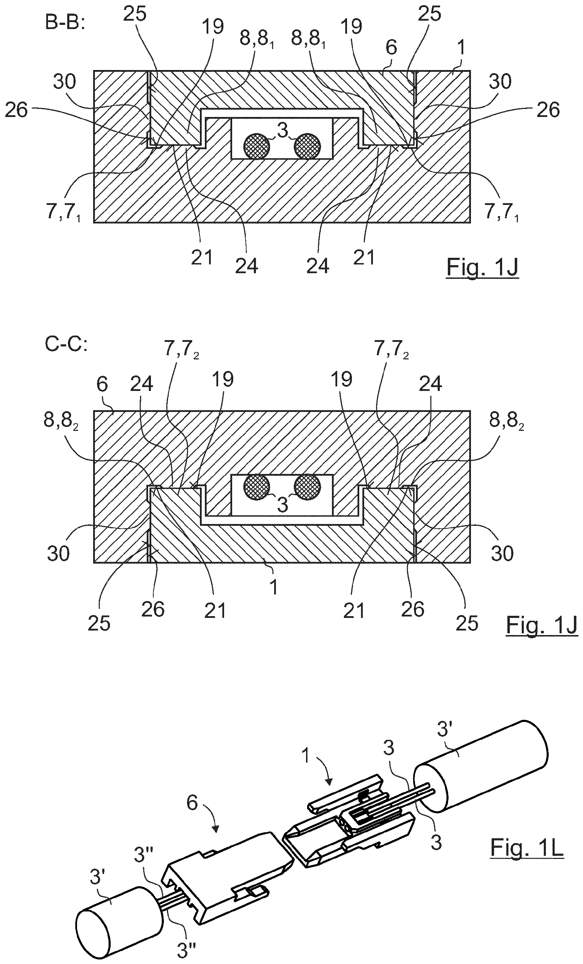

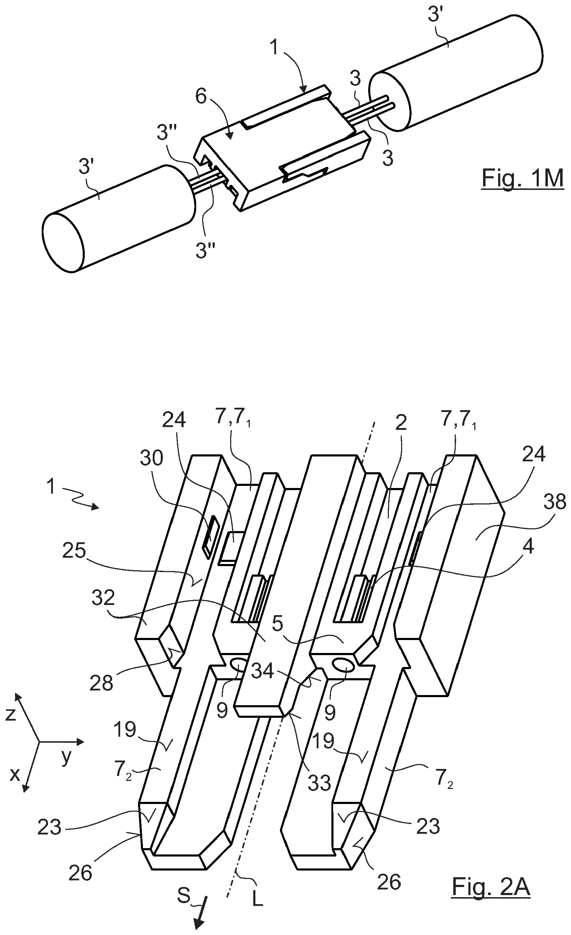

Aus den Figuren 1A, 1B und 1C geht eine erste Ausführungsform einer erfindungsgemäßen optischen Ferrule 1 hervor, welche eine bevorzugte Ausführungsform einer optischen Ferrule 1 darstellt. Das Zusammenwirken einer ersten Ausführungsform der optischen Ferrule 1 mit einer zugehörigen optischen Gegenferrule 6 kann den Figuren 1D, 1E, 1F, 1G, 1H, 1I, 1J, 1K, 1L und 1M entnommen werden:
Die optische Ferrule 1 weist in Steckrichtung S einen Aufnahmebereich 2 zur Aufnahme einzelner Lichtwellenleiter 3 in die optische Ferrule 1, einen sich an den Aufnahmebereich 2 axial anschließenden Fixierungsbereich 4 zur Fixierung der einzelnen Lichtwellenleiter 3 an die optische Ferrule 1 und einen sich an den Fixierungsbereich 4 axial anschließenden optischen Bereich 5 zur Strahlformung des in die einzelnen Lichtwellenleiter 3 jeweils einzukoppelnden oder auszukoppelnden Lichtstrahlbündels (siehe hierzu insbesondere die Figuren 1B und 1D) auf. Die Steckrichtung S der optischen Ferrule 1 ist hierbei in Längsachsrichtung x der Längsachse L der optischen Ferrule 1 gerichtet (siehe hierzu die Orientierung der Steckrichtung S im Koordinatensystem x-y-z der Fig 1A).

Zur Kopplung der einzelnen Lichtstrahlbündel zwischen dem optischen Bereich 5 der optischen Ferrule 1 und dem optischen Bereich einer zugehörigen optischen Gegenferrule 6 in einer Richtung x parallel zur Längsachse L der optischen Ferrule 1 sind in einer ersten Ausführungsform der optischen Ferrule 1 zwei Führungsbereiche 7 ausgebildet. Diese beiden Führungsbereiche 7 sind jeweils als ein Linearführungsbereich ausgeführt und bilden mit einem zugehörigen Gegenführungsbereich 8 einer optischen Gegenferrule 6 eine Linearführung (siehe hierzu die Figuren 1D bis 1I).

An jeder Seite des optischen Bereiches 5, insbesondere lateral benachbart zu den im optischen Bereich 5 jeweils ausgebildeten Strahlformungsmitteln 9, ist in jeweils einer ersten Querrichtung ±y, welche jeweils orthogonal zur Richtung x der Längsachse L gerichtet ist, jeweils einer der beiden Führungsbereiche 7 der optischen Ferrule 1 ausgebildet. Der einzelne Führungsbereich 7 ist nicht nur lateral benachbart zum optischen Bereich 5, sondern auch lateral benachbart zum Aufnahmebereich 2 und zum Fixierungsbereich 4 ausgebildet. Der einzelne Führungsbereich 7 ist lateral benachbart zum Zuführungsbereich 2, zum Fixierungsbereich 4 und zum optischen Bereich 5 jeweils als nutförmiger Teilabschnitt 7₁ ausgebildet, in dem ein rippenförmiger Teilabschnitt 8₁ eines zugehörigen Gegenführungsbereichs 8 einer optischen Gegenferrule 6 geführt und somit ausgerichtet ist (siehe hierzu die Querschnittsebene B-B in Fig. 1J). An den nutförmigen Teilabschnitt 7₁ des einzelnen Führungsbereichs 7 schließt sich in der Steckrichtung S ein rippenförmiger Teilabschnitt 7₂ des einzelnen Führungsbereiches 7 axial an, der in einem nutförmigen Teilabschnitt 8₂ des einzelnen Gegenführungsbereichs 8 geführt und somit ausgerichtet ist (siehe hierzu die Querschnittsebene C-C in Fig. 1K).

Der Aufnahmebereich 2 der optischen Ferrule 1 weist eine stirnseitige Öffnung 10 zur Zuführung der einzelnen Lichtwellenleiter 3 auf. Innerhalb des Aufnahmebereichs 2 ist typischerweise ein in den Figuren nicht dargestelltes Klemmmittel vorgesehen, das den einzelnen Lichtwellenleiter 3 an dessen äußerer Hülle im Hinblick auf eine axiale und laterale Vorfixierung klemmt.

Im sich an den Aufnahmebereich 2 axial anschließenden Fixierungsbereich 4 ist für jeden Lichtwellenleiter 3 jeweils eine Nut 11 ausgebildet, deren Längserstreckung sich in Richtung x der Längsachse L der optischen Ferrule 1 erstreckt. Zur Ausrichtung der einzelnen Lichtwellenleiter 3 in Richtung der Längsachse L weist jede Nut 11 jeweils vorzugsweise ein V-förmiges Querschnittsprofil auf. Wie aus Fig. 1D hervorgeht, befindet sich innerhalb der Nut 11 des Fixierungsbereichs 2 ein axialer Endabschnitt 12 des Lichtwellenleiters 3. Der axiale Endabschnitt 12 des Lichtwellenleiters 3 ist ein vom Mantel, von der Schutzbeschichtung und von der äußeren Hülle freigelegter innerer Kern des als eine Glasfaser ausgebildeten Lichtwellenleiters 3. Wie ebenfalls aus Fig. 1D hervorgeht, befindet sich die Faserendfläche 13 jedes Lichtwellenleiters 3 jeweils in einer Position, die dem axialen Ende der zugehörigen Nut 11 in der Steckrichtung S der optischen Ferrule 1 entspricht. Somit kontaktiert die Faserendfläche 13 des einzelnen Lichtwellenleiters 3 jeweils unmittelbar eine optisch aktive Fläche 14 eines zugehörigen Strahlformungsmittels 9 am eingangsseitigen Ende 15 des optischen Bereichs 5. Die Fixierung des einzelnen Lichtwellenleiters 3 in der zugehörigen Nut 11 des Fixierungsbereiches 4 erfolgt vorzugsweise mittels eines transparenten Klebers.

In der in den Figuren jeweils dargestellten optischen Ferrule 1 sind beispielsweise zwei Nuten 11 zur Fixierung von jeweils einem Lichtwellenleiter 3 dargestellt. Alternativ ist auch eine höhere Anzahl von Nuten 11 zur Fixierung einer entsprechenden Anzahl von Lichtwellenleitern 3 skalierbar. Die beiden Lichtwellenleiter 3 übertragen vorzugsweise jeweils ein optisches Datensignal in einer unterschiedlichen Übertragungsrichtung. Denkbar ist aber auch, dass die beiden Lichtwellenleiter 3 ein optisches Datensignal jeweils in der gleichen Übertragungsrichtung übertragen.

Im optischen Bereich 5 der optischen Ferrule 1 ist eine der Anzahl von optisch gekoppelten Lichtwellenleitern 3 entsprechende Anzahl von Strahlformungsmitteln 9 ausgebildet. Jedes Strahlformungsmittel 9 erstreckt sich jeweils in einem in Fig. 1B jeweils gestrichelt dargestellten Teilbereich 16 des optischen Bereichs 5 von einer optisch aktiven Fläche 15, welche an einem in der Steckrichtung S eingangsseitigen Ende 16 des optischen Bereiches 5 ausgebildet ist, bis zu einer optisch aktiven Fläche 17, welche an einem in der Steckrichtung S ausgangsseitigen Ende 18 des optischen Bereiches 5 ausgebildet ist. Die optisch aktive Fläche 14 jedes Strahlformungsmittels 9 am eingangsseitigen Ende 15 des optischen Bereiches 5 ist vorzugsweise jeweils plan oder allenfalls jeweils konkav geformt. Die optisch aktive Fläche 17 jedes Strahlformungsmittels 9 am ausgangseitigen Ende 18 des optischen Bereiches 5 ist jeweils konvex geformt, um jeweils ein fokussiertes oder kollimiertes Lichtstrahlenbündel in einen Freiraum in Richtung des optischen Bereiches der optischen Gegenferrule 6 abzustrahlen oder alternativ ein vom optischen Bereich der optischen Gegenferrule 6 im Freiraum empfangenes fokussiertes oder kollimiertes Lichtstrahlenbündel im zugehörigen Lichtwellenleiter 3 zu fokussieren.

Jeder Führungsbereich 7 der optischen Ferrule 1 weist eine planare erste Führungsfläche 19 auf, deren Flächenvektor in einer zweiten Querrichtung z gerichtet ist, welche orthogonal zur Längsachsrichtung x der Längsachse L (bzw. zur Steckrichtung S) und orthogonal zur ersten Querrichtung y gerichtet ist. Die planare erste Führungsfläche 19 jedes Führungsbereichs 7 erstreckt sich ohne Stufe über den nutförmigen Teilabschnitt 7₁ und den rippenförmigen Teilabschnitt 7₂ des jeweiligen Führungsbereichs 7. Die planare erste Führungsfläche 19 jedes Führungsbereichs 7 der optischen Ferrule 1, die optische Achse jedes Strahlformungsmittels 9 im optischen Bereich 5 der optischen Ferrule 1 und/oder die optische Achse der axialen Endabschnitte 12 jedes fixierten Lichtwellenleiters 3 befinden sich auf einer in Fig. 1C dargestellten ersten Schnittebene 20 der optischen Ferrule 1. An der planaren ersten Führungsfläche 19 jedes Führungsbereiche 7 der optischen Ferrule 1 gleitet im Steckvorgang die zugehörige planare erste Gegenführungsfläche 21 des zugehörigen Gegenführungsbereichs 8 der optischen Gegenferrule 6 entlang.

In einem in der Steckrichtung S vorderen Endabschnitt 22 der planaren ersten Führungsflächen 19 jedes Führungsbereiches 7 der optischen Ferrule 1 ist jeweils eine erste Zentrierfläche 23 als eine Fase ausgebildet. Die als eine Fase ausgebildete erste Zentrierfläche 23 jedes Führungsbereiches 7 der optischen Ferrule 1 wirkt mit einer erste Zentrierfläche 23 in einem vorderen Endabschnitt 22 der planaren ersten Gegenführungsfläche 21 des zugehörigen Gegenführungsbereichs 8 der optischen Gegenferrule 6 zusammen, falls der Abstand zwischen der optischen Ferrule 1 und der optischen Gegenferrule 6 in der zweiten Querrichtung z zu gering ist. Auf diese Weise erfolgt eine grobe Ausrichtung zwischen der optischen Ferrule 1 und der optischen Gegenferrule 6 in der zweiten Querrichtung z.

Für eine Feinausrichtung zwischen der optischen Ferrule 1 und optischen Gegenferrule 6 in der zweiten Querrichtung z ragt im nutförmigen Teilabschnitt 7₁ jedes Führungsbereichs 7 aus der planaren ersten Führungsfläche 19 jeweils eine erste Zentrierstütze 24 hervor. Auf der ersten Zentrierstütze 24 jedes Führungsbereiches 7 der optischen Ferrule liegt ein entsprechender Bereich der planaren ersten Gegenführungsfläche 21 des zugehörigen Gegenführungsbereiches 8 der optischen Gegenferrule 6 auf. Äquivalent ragt aus dem nutförmigen Teilabschnitt 8₂ jedes Gegenführungsbereichs 8 jeweils eine erste Zentrierstütze 24 hervor, auf der ein entsprechender Bereich der planaren ersten Führungsfläche 19 des zugehörigen Führungsbereiches 7 der optischen Ferrule 1 aufliegt.

Im nutförmigen Teilabschnitt 7₁ und im rippenförmigen Teilabschnitt 7₂ jedes Führungsbereichs 7 der optischen Ferrule 1 ist jeweils eine planare zweite Führungsfläche 25 ausgebildet. Die planare zweite Führungsfläche 25 jedes Führungsbereiches 7 ist jeweils orthogonal zur planaren ersten Führungsfläche 19 des zugehörigen Führungsbereiches 7 orientiert. Vorzugsweise handelt es sich hierbei um die außenseitige planare zweite Führungsfläche 25 der einzelnen Führungsbereiche 7 der optischen Ferrule 1. An der planaren zweiten Führungsfläche 25 jedes Führungsbereichs 7 der optischen Ferrule 1 gleitet im Steckvorgang die planare zweite Gegenführungsfläche 26 des zugehörigen Gegenführungsbereichs 8 der optischen Gegenferrule 6 entlang, die ebenfalls vorzugsweise außenseitig ausgebildet ist.

In einem in der Steckrichtung S vorderen Endabschnitt 25` der planaren zweiten Führungsfläche 25 im rippenförmigen Teilabschnitt 7₂ jedes Führungsbereiche 7 der optischen Ferrule 1 ist jeweils eine Zentrierfläche 27 als eine Fase ausgebildet, welche hierbei und im Folgenden als zweite Zentrierfläche 27 bezeichnet wird. Die zweite Zentrierfläche 27 im rippenförmigen Teilabschnitt 7₂ jedes Führungsbereichs 7 der optischen Ferrule 1 wirkt mit einer als eine Fase ausgebildeten Zentrierfläche 28 in einem in der Steckrichtung S vorderen Endabschnitt 29 einer planaren zweiten Gegenführungsfläche 26 im nutförmigen Teilabschnitt 8₂ jedes Gegenführungsbereichs 8 der optischen Gegenferrule 6 zusammen. Diese Zentrierfläche 28 wird hierbei und im Folgenden als dritte Zentrierfläche 28 bezeichnet.

Auf diese Weise erfolgt während des Steckvorgangs eine grobe Zentrierung zwischen der optischen Ferrule 1 und der optischen Gegenferrule 6 in der ersten Querrichtung ±y. Die dritte Zentrierfläche 28 im vorderen Endabschnitt 29 einer planaren zweiten Gegenführungsfläche 26 im nutförmigen Teilabschnitt 8₂ eines Gegenführungsbereichs 8 der optischen Gegenferrule 6 entspricht einer dritten Zentrierfläche 28 im vorderen Endabschnitt 29 einer planaren zweiten Führungsfläche 25 im nutförmigen Teilabschnitt 7₁ eines Führungsbereichs 7 der optischen Ferrule 1.

Wie insbesondere aus Fig. 1B hervorgeht, kann der nutförmige Teilabschnitt 7₁ und der rippenförmige Teilabschnitt 7₂ jedes Führungsbereiches 7 der optischen Ferrule 1 alternativ oder ergänzend zu einer außenseitigen planaren zweiten Führungsfläche 25 auch eine innenseitige planare zweite Führungsfläche 25 aufweisen. Auch die innenseitige planare zweite Führungsfläche 25 kann in einem vorderen Endabschnitt 25' im rippenförmigen Teilabschnitt 7₂ eine zweite Zentrierfläche 27 und in einem vorderen Endabschnitt 29 im nutförmigen Teilabschnitt 7₁ eine dritte Zentrierfläche 28 aufweisen.

Im nutförmigen Teilabschnitt 7₁ jedes Führungsbereiches 7 der optischen Ferrule 1 ragt aus der planaren zweiten Führungsfläche 25 jeweils eine zweite Zentrierungsstütze 30 hervor, auf der im Hinblick auf eine Feinzentrierung zwischen der optischen Ferrule 1 und der optischen Gegenferrule 6 in der ersten Querrichtung ±y ein Bereich der planaren zweiten Gegenführungsfläche 26 des zugehörigen Gegenführungsbereichs 8 der optischen Gegenferrule 6 aufliegt. Äquivalent ragt aus der planaren zweiten Gegenführungsfläche 26 im nutförmigen Teilabschnitt 8₂ jedes Gegenführungsbereichs 8 der optischen Gegenferrule 6 jeweils eine zweite Zentrierstütze 30 hervor, auf der ein Bereich der planaren zweiten Führungsfläche 25 des zugehörigen Führungsbereiches 7 der optischen Ferrule 1 aufliegt. Wie aus Fig. 1B hervorgeht, können alle ersten Zentrierstützen 24 und alle zweiten Zentrierstützen 30 auf derselben axialen Position innerhalb der optischen Ferrule 1, insbesondere auf der gestrichelt dargestellten zweiten Schnittebene 31 der optischen Ferrule 1, angeordnet sein.

Zusätzlich kann in der ersten Ausführungsform der optischen Ferrule 1 lateral benachbart zu den beiden Führungsbereichen 7 jeweils ein Zentriermittel 32 ausgebildet sein. Eine Seitenwand jedes Zentriermittels 32 bildet jeweils eine außenseitige planare zweite Führungsfläche 25 des benachbarten Führungsbereiches 7 aus. An jedem Zentriermittel 32 ist jeweils eine vierte Zentrierfläche 33 und eine fünfte Zentrierfläche 34 ausgebildet, die jeweils eine erste Richtungskomponente in der Steckrichtung S und eine zweite Richtungskomponente in einer zu einem Flächenvektor der planaren ersten Führungsfläche 19 entgegengesetzten Richtung aufweisen. Innerhalb des Zentriermittels 32 ist die vierte Zentrierfläche 33 der fünften Zentrierfläche 34 in der Steckrichtung S axial vorgelagert ausgebildet.

Bei einem größeren Abstand zwischen der optischen Ferrule 1 und der optischen Gegenferrule 6 in der zweiten Querrichtung z treffen im Steckvorgang zuerst die vierten Zentrierflächen 33 der beiden Zentriermittel 32 der optischen Ferrule 1 auf vierte Gegenzentrierflächen 35 von zugehörigen Gegenzentriermitteln 36 der optischen Gegenferrule 6 aufeinander und bewirken eine grobe Zentrierung zwischen der optischen Ferrule 1 und der optischen Gegenferrule 6 in der zweiten Querrichtung z. Eine Feinzentrierung zwischen der optischen Ferrule 1 und der optischen Gegenferrule 6 in der zweiten Querrichtung z erfolgt daraufhin durch ein Auftreffen der fünften Zentrierflächen 34 der beiden Zentriermittel 32 der optischen Ferrule 1 auf fünfte Gegenzentrierflächen 37 der zugehörigen Gegenzentriermittel 36 der optischen Gegenferrule 6. Zur Ausgestaltung der Zentriermittel 32 und der zugehörigen Gegenzentriermittel 36 sei hierbei auf die Figuren 1C, 1E und 1H verwiesen. Die fünften Zentrierflächen 34 der optischen Ferrule 1 und die fünften Gegenzentrierflächen 37 der optischen Gegenferrule 6 bilden zusätzlich eine Stoppfunktion zwischen der optischen Ferrule 1 und der optischen Gegenferrule 6 in der Längsachsrichtung x (bzw. Steckrichtung S). Die vierten Zentrierflächen 33 und die fünften Zentrierflächen 34 der optischen Ferrule 1 sowie die vierten Gegenzentrierflächen 35 und die fünften Gegenzentrierflächen 37 der optischen Gegenferrule 6 bewirken, dass sich die optische Ferrule 1 und die optische Gegenferrule 6 in der zweiten Querrichtung z nähern.

Der nicht gesteckte Zustand zwischen der optischen Ferrule 1 und der optischen Gegenferrule 2 ist in einer Draufsicht der Fig. 1D, in einer Seitenansicht der Fig. 1E und in einer Längsschnittdarstellung der Fig. 1F zu entnehmen. Die Längsschnittdarstellung der Fig. 1F ergibt sich hierbei aus einem Schnitt entlang der Längsachse L der optischen Ferrule 1 bzw. der optischen Gegenferrule 6. Der gesteckte Zustand zwischen der optischen Ferrule 1 und der optischen Gegenferrule 2 ist in einer Draufsicht der Fig. 1G, in einer Seitenansicht der Fig. 1H und in einer Längsschnittdarstellung der Fig. 1I zu entnehmen. Hierbei sind die einzelnen Lichtwellenleiter 3 der optischen Ferrule 1 und die Gegenlichtwellenleiter 3" der optischen Gegenferrule 6 außerhalb der optischen Ferrule 1 bzw. der optischen Gegenferrule 6 jeweils in einem gemeinsamen Kabel 3' zusammengeführt.

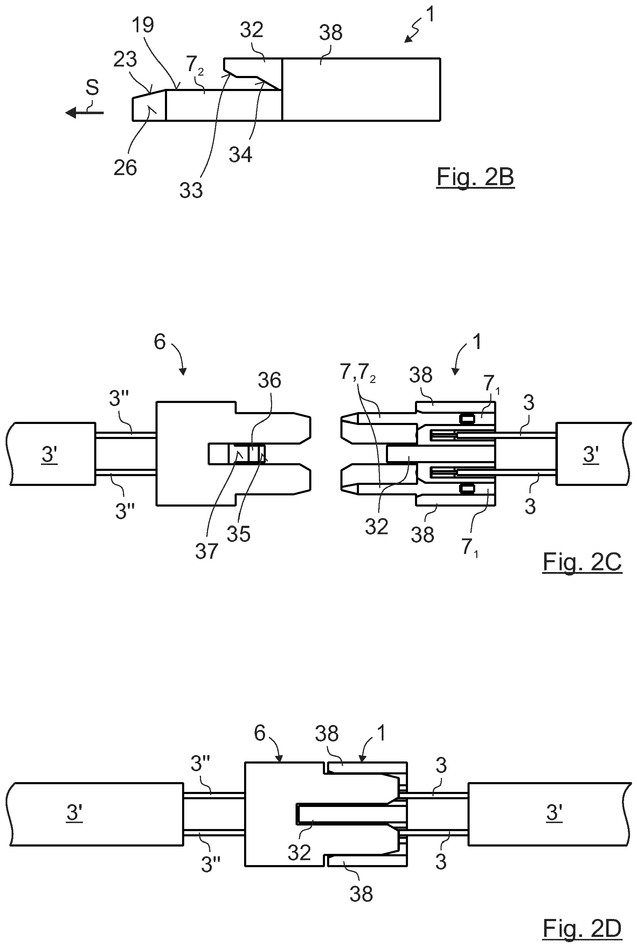

Aus den Figuren 2A und 2B geht eine weitere Ausführungsform einer Zentrierung in einer erfindungsgemäßen optischen Ferrule 1 hervor. Das Zusammenwirken einer erfindungsgemäßen optischen Ferrule 1 mit einer zugehörigen optischen Gegenferrule 6 mit der weiteren Ausführungsform der Zentrierung ist in den Figuren 2C und 2D dargestellt:
Bei der weiteren Ausführungsform einer Zentrierung ist ein einziges Zentriermittel 32 mit einer vierten Zentrierfläche 33 und einer fünften Zentrierfläche 34 ausgebildet. Das einzige Zentriermittel 32 ist mittig innerhalb der optischen Ferrule 1 entlang der Längsachse L ausgebildet und trennt den Aufnahmebereich 2, den Fixierungsbereich 4 und den optischen Bereich 5 in jeweils zwei Teilbereiche, die jeweils lateral benachbart zum Zentriermittel 32 ausgebildet sind. Die vierte Zentrierfläche 33 und die fünfte Zentrierfläche 34 des einzigen Zentriermittels 32 der optischen Ferrule 1 wirkt mit einer vierten Gegenzentrierfläche 35 bzw. einer fünften Gegenzentrierfläche 37 des einzigen Gegenzentriermittels 36 der optischen Gegenferrule 6 zusammen. Das einzige Gegenzentriermittel 36 der optischen Gegenferrule 6 ist ebenfalls mittig innerhalb der optischen Gegenferrule 6 entlang der Längsachse L ausgebildet.

Zur Ausbildung eines nutförmigen Teilabschnitts 7₁ für die beiden Führungsbereiche 7 der optischen Ferrule 1 ist lateral benachbart zu den beiden Führungsbereichen 7 jeweils ein Wandabschnitt 38 ausgebildet, der innenseitig eine planare zweite Führungsfläche 25 ausbildet.

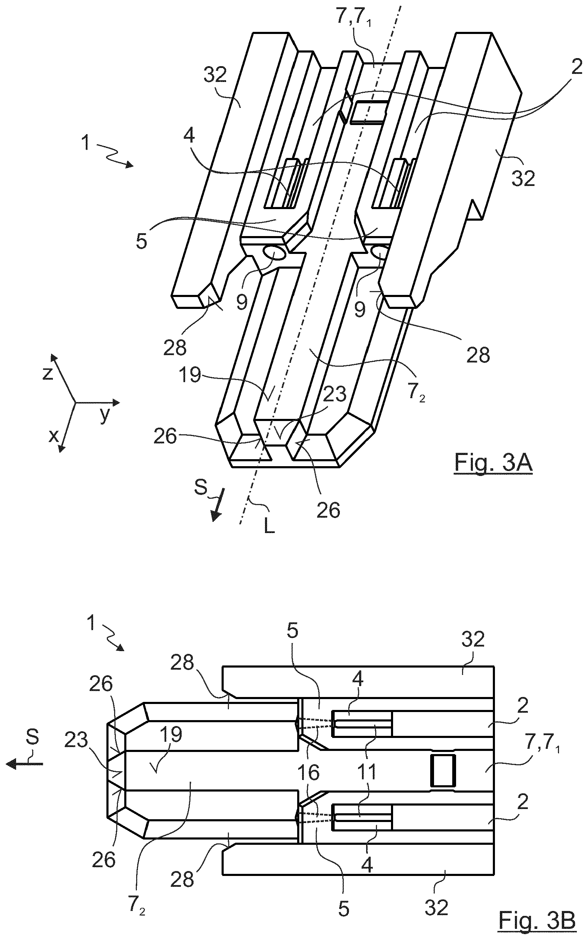

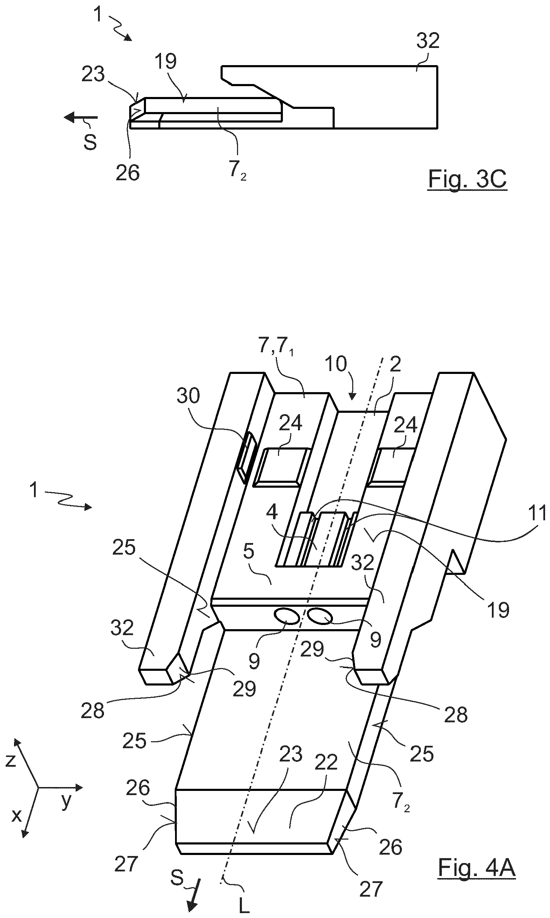

Aus den Figuren 3A, 3B und 3C geht eine zweite Ausführungsform einer erfindungsgemäßen optischen Ferrule 1 hervor:
In der zweiten Ausführungsform einer erfindungsgemäßen optischen Ferrule 1 ist ein einziger Führungsbereich 7 vorgesehen, der mittig innerhalb der optischen Ferrule 1 entlang der Längsachse L ausgebildet ist. Der einzige Führungsbereich 7 der optischen Ferrule 1 bildet mit einem einzigen Gegenführungsbereich 8 der optischen Gegenferrule 6, der ebenfalls mittig innerhalb der optischen Gegenferrule 6 entlang der Längsachse L ausgebildet ist, eine Linearführung.

Der einzige Führungsbereich 7 teilt den Aufnahmebereich 2, den Fixierungsbereich 4 und den optischen Bereich 5 jeweils in zwei Teilbereiche, an die sich jeweils unmittelbar ein Zentriermittel 32 anschließt.

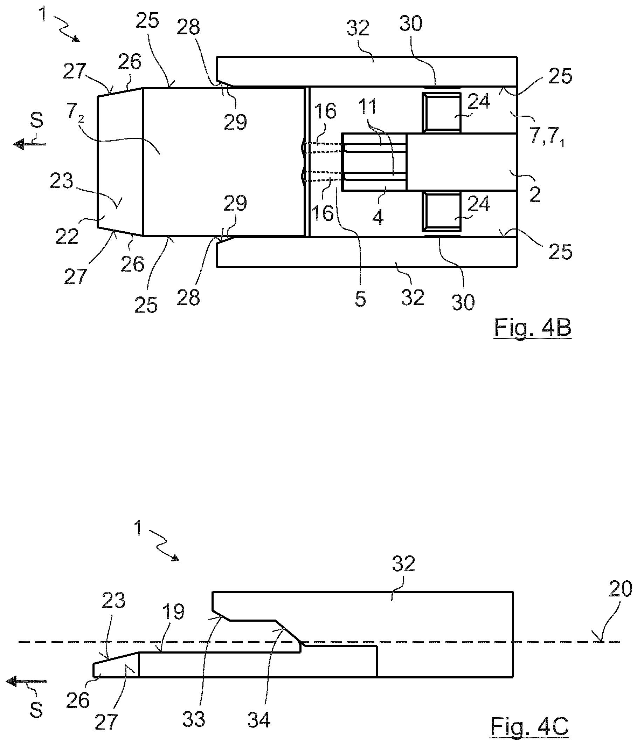

Aus den Figuren 4A, 4B und 4C geht eine dritte Ausführungsform einer erfindungsgemäßen optischen Ferrule 1 hervor:
In der dritten Ausführungsform einer erfindungsgemäßen optischen Ferrule 1 ist symmetrisch zur Längsachse L ein einziger Führungsbereich 7 ausgebildet, der mit einem einzigen und ebenfalls zur Längsachse L symmetrisch ausgebildeten Gegenführungsbereich 8 der Gegenferrule 6 eine Linearführung bildet. Der nutförmiger Teilabschnitt 7₁ des einzigen Führungsbereichs 7 ist seitlich zum optischen Bereich 5, zum Fixierungsbereich 4 und zum Aufnahmebereich 2 in der zweiten Querrichtung z ausgebildet und ist von den beiden seitlich ausgebildeten Zentriermittel 32 eingerahmt. Im nutförmigen Teilabschnitt 7₁ des einzigen Führungsbereichs 7 der optischen Ferrule 1 ist ein rippenförmiger Teilabschnitt 8₁ des einzigen Gegenführungsbereichs 8 der optischen Gegenferrule 6 ausgerichtet und aufgenommen.

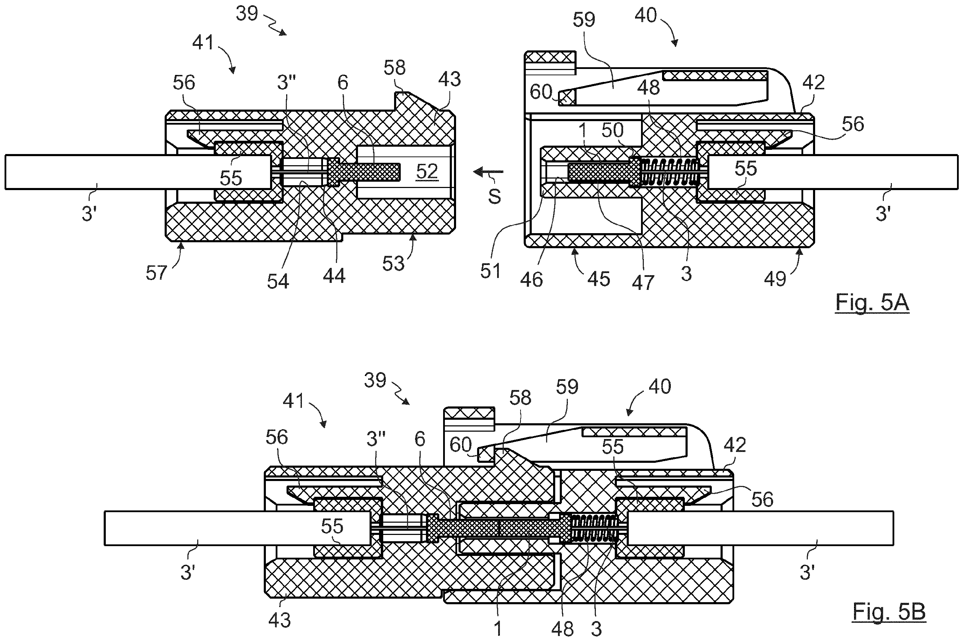

Aus den Figuren 5A und 5B geht eine optische Steckverbindung 39 mit einem optischen Steckverbinder 40 und einem zugehörigen optischen Gegensteckverbinder 41 im nicht gesteckten Zustand bzw. im gesteckten Zustand hervor:
Die optische Ferrule 1, die in einem Steckverbindergehäuse 42 des optischen Steckverbinders 40 angeordnet ist, und die optischen Gegenferrule 6 die in einem Gegensteckverbindergehäuse 43 des optischen Gegensteckverbinders 41 angeordnet ist, sind in den Figuren 5A und 5B zur Vereinfachung der Darstellung jeweils schematisch nur als quaderförmige Körper dargestellt. Die optische Ferrule 1 ist im Steckverbindergehäuse 42 des optischen Steckverbinders 40 schwimmend gelagert, während die optische Gegenferrule 6 im Gegensteckverbindergehäuse 43 beispielsweise fixiert gelagert ist (siehe hierzu den Fixierhaken 44 des Gegensteckverbindergehäuses 43). Alternativ ist es auch möglich, dass sowohl die optische Ferrule 1 als auch die optische Gegenferrule 6 schwimmend gelagert sind.

Die optische Ferrule 1 ist in einem steckseitigen Endbereich 45 einer im Steckverbindergehäuse 42 in axialer Richtung ausgebildeten Durchführung 46 schwimmend gelagert. Die schwimmende Lagerung der optischen Ferrule 1 in lateraler Richtung ist durch einen Luftspalt 47 verwirklicht, der umlaufend zwischen der optischen Ferrule 1 und der Innenwand der Durchführung 46 ausgebildet ist. Die schwimmende Lagerung in axialer Richtung erfolgt dadurch, dass die optische Ferrule 1 in Steckrichtung S des optischen Steckverbinders 40 mit der Federkraft einer in der Durchführung 46 vorgespannt gelagerten Feder 48 beaufschlagt wird, welche sich in Richtung eines kabelseitigen Endbereichs 49 der Durchführung 46 axial an die optische Ferrule 1 unmittelbar anschließt. Im nicht gesteckten Zustand der optischen Steckverbindung 39 gemäß Fig. 5A wird die optische Ferrule durch die Feder 48 an eine in der Durchführung 46 ausgebildete Stufe 50 elastisch gedrückt. Im gesteckten Zustand der optischen Steckverbindung 39 gemäß Fig. 5B löst sich die optische Ferrule 1 von der Stufe 50 in Richtung des kabelseitigen Endes 49 der Durchführung 46. Die Feder 48, die dadurch zusätzlich komprimiert wird, bewirkt mit ihrer erhöhten Federkraft eine ausreichende axiale Fixierung zwischen der optischen Ferrule 1 und der optischen Gegenferrule 6.

Zur Verwirklichung eines Steckvorgangs zwischen der optischen Ferrule 1 und der optischen Gegenferrule 6 ist steckseitig im Steckverbindergehäuse 48 des optischen Steckverbinders 40 eine mechanische Schnittstelle 51 ausgebildet, die mit einer mechanischen Gegenschnittstelle 52 am steckseitige Ende 53 des Gegensteckverbindergehäuses 43 des optischen Gegensteckverbinders 41 zusammenwirkt. Die mechanische Schnittstelle 51 des optischen Steckverbinders 40 ist beispielsweise stiftförmig ausgeformt, welche in eine buchsenförmige mechanische Gegenschnittstelle 52 des optischen Gegensteckverbinders 41 einführbar und aufnehmbar ist. Alternativ kann die mechanische Schnittstelle 51 des optischen Steckverbinders 40 auch buchsenförmig ausgebildet sein und in eine mechanische Gegenschnittstelle 52 des optischen Gegensteckverbinders 41 einführbar und aufnehmbar sein, welche stiftförmige ausgebildet sein kann.

Die buchsenförmige mechanische Gegenschnittstelle 52 des Gegensteckverbindergehäuses 43 bildet den steckseitigen Endabschnitt einer im Gegensteckverbindergehäuse 43 axial ausgebildeten Durchführung 54 dar. In der Durchführung 54 des Gegensteckverbindergehäuses 43 ist die optische Gegenferrule 6 fixiert gelagert und ragt derart weit in die buchsenförmige mechanische Gegenschnittstelle 52 hinein, dass im gesteckten Zustand die optische Gegenferrule 6 in die Durchführung 46 des Steckverbindergehäuses 42 hineinragt und mit der darin schwimmend gelagerten optischen Ferrule 1 steckbar ist. Hierzu ist die optische Ferrule 1 im Bereich der stiftförmigen mechanischen Schnittstelle 51 des Steckverbindergehäuses 4 innerhalb der Durchführung 46 zurückversetzt angeordnet.

Am kabelseitigen Ende 49 der Durchführung 46 des optischen Steckverbinders 40 ist die Durchführung 46 erweitert, um ein Kabel 3' mit den Lichtwellenleitern 3 aufzunehmen. Das Kabel 3' ist über ein Kabelfixierungsmittel 55 am Steckverbindergehäuse 42 fixiert. Die Fixierung des Kabels 3' am Kabelfixierungsmittel 55 kann kraftschlüssig (beispielsweise mittels Pressung), formschlüssig (beispielsweise mittels einer Verrastung) oder stoffschlüssig (beispielsweise mittels einer Klebung) realisiert sein. Das Kabelfixierungsmittel 55 kann einteilig mit dem Steckverbindergehäuse 42 oder als ein vom Steckverbindergehäuse 42 separates Bauteil ausgeführt sein, wie in den Figuren 5A und 5H dargestellt ist. Im letzteren Fall kann das Kabelfixierungsmittel 55 beispielsweise über ein am Steckverbindergehäuse 42 ausgebildeten Rasthaken 56 formschlüssig am Steckverbindergehäuse 42 fixiert sein.

Im kabelseitigen Endbereich 57 der axialen Durchführung 54 des Gegensteckverbindergehäuse 43 ist ein Kabel 3' mit den in der optischen Gegenferrule 6 aufgenommenen und fixierten Lichtwellenleitern 3 in äquivalenter Weise zur Kabelfixierung im Steckverbindergehäuse 42 über ein Kabelfixierungsmittel 52 an das Gegensteckverbindergehäuse 43 fixiert. Das Steckverbindergehäuse 42 des optischen Steckverbinders 40 und das Gegensteckverbindergehäuse 43 des optischen Gegensteckverbinders 41 sind in üblicher Weise über eine Rastverbindung mittels eines Rasthakens 58 und einer Rasterausnehmung 59 in einer elastisch ausgeführten Rastlasche 60 zueinander fixiert.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

## Patentansprüche

1. Optische Ferrule (1) zur Ausrichtung eines Lichtwellenleiters (3), vorzugsweise einer optischen Faser, mit einem Gegenlichtwellenleiter (3"), vorzugsweise einer optischen Gegenfaser, einer optischen Gegenferrule (6) aufweisend
- einen Fixierungsbereich (4) zur Fixierung eines axialen Endabschnitts (12) des Lichtwellenleiters (3), wobei der Fixierungsbereich (4) derart ausgebildet ist, dass eine Längsachse des axialen Endabschnitts (12) des Lichtwellenleiters (3) in einer Steckrichtung S der optischen Ferrule (1) ausrichtbar ist,
- einen optischen Bereich (5) zur Strahlformung zwischen einem in dem Lichtwellenleiter (3) übertragenen Lichtstrahlbündel und dem in einem Freiraum fokussiert oder kollimiert übertragenen Lichtstrahlbündel, welcher sich in der Steckrichtung S an den Fixierungsbereich (4) axial anschließt und in welchem ein Strahlformungsmittel (9), vorzugsweise eine Sammellinse, mit einer in der Steckrichtung S verlaufenden optischen Achse ausgebildet ist, und
- wenigstens einem Führungsbereich (7) mit einer Längserstreckung in der Steckrichtung S, welcher jeweils einen nutförmigen Teilabschnitt (7₁) aufweist, wobei die nutförmigen Teilabschnitte (7₁) jeweils seitlich benachbart zum Strahlformungsmittel (9) ausgebildet sind und eingerichtet sind, sich jeweils mit einem rippenförmigen Teilabschnitt (8₁) eines zugehörigen Gegenführungsbereichs (8) der optischen Gegenferrule (6) auszurichten.

2. Optische Ferrule (1) nach Anspruch 1,
**dadurch gekennzeichnet,**
**dass** der wenigstens eine Führungsbereich (7) jeweils zusätzlich einen rippenförmigen Teilabschnitt (7₂) aufweist, der sich an den nutförmigen Teilabschnitt (7₁) in der Steckrichtung S axial anschließt, wobei die rippenförmigen Teilabschnitte (7₂) eingerichtet sind, sich jeweils mit einem nutförmigen Teilabschnitt (8₂) des zugehörigen Gegenführungsbereichs (8) auszurichten.

3. Optische Ferrule (1) nach Anspruch 2,
**dadurch gekennzeichnet,**
**dass** der nutförmige Teilabschnitt (7₁) und der rippenförmige Teilabschnitt (7₂) jedes Führungsbereichs (7) jeweils eine planare erste Führungsfläche (19) aufweist, welche entweder in einer ersten Schnittebene (20) der optischen Ferrule (1) oder parallel zur ersten Schnittebene (20) liegen.

4. Optische Ferrule (1) nach Anspruch 3,
**dadurch gekennzeichnet,**
**dass** die erste Schnittebene (20) durch die optischen Achsen jedes Strahlformungsmittel (9) aufgespannt ist oder durch eine Symmetrieebene der optischen Achsen jedes Strahlformungsmittel (9) gebildet ist.

5. Optische Ferrule (1) nach Anspruch 3 oder 4,
**dadurch gekennzeichnet,**
**dass** in einem in der Steckrichtung S vorderen Endabschnitt (22) der planaren ersten Führungsfläche (1) jedes rippenförmigen Teilabschnitts (7₂) jeweils eine erste Zentrierfläche (23), insbesondere eine Fase, ausgebildet ist.

6. Optische Ferrule (1) nach einem der Ansprüche 3 bis 5,
**dadurch gekennzeichnet,**
**dass** aus der planaren ersten Führungsfläche (19) im nutförmigen Teilabschnitt (7₁) jedes Führungsbereichs (7) jeweils eine erste Zentrierstütze (24) zur Feinausrichtung zwischen der Ferrule (1) und der Gegenferrule (6) hervorragt.

7. Optische Ferrule (1) nach einem der Ansprüche 2 bis 6,
**dadurch gekennzeichnet,**
**dass** jeder Führungsbereich (7) im nutförmigen Teilabschnitt (7₁) und im rippenförmigen Teilabschnitt (7₂) jeweils wenigstens eine planare zweite Führungsfläche (25) aufweist, welche jeweils orthogonal zur zugehörigen planaren ersten Führungsfläche (19) orientiert ist.

8. Optische Ferrule (1) nach Anspruch 7,
**dadurch gekennzeichnet,**
**dass** in einem in der Steckrichtung S vorderen Endabschnitt (25') der wenigstens einen planaren zweiten Führungsfläche (25) jedes rippenförmigen Teilabschnitts (7₂) jeweils eine zweite Zentrierfläche (27), insbesondere eine Fase, ausgebildet ist.

9. Optische Ferrule (1) nach Anspruch 7 oder 8,
**dadurch gekennzeichnet,**
**dass** in einem in der Steckrichtung vorderen Endabschnitt (29) der wenigstens einen planaren zweiten Führungsfläche (25) jedes nutförmigen Teilabschnitts (7₁) jeweils eine dritte Zentrierfläche (28), insbesondere eine Fase, ausgebildet ist.

10. Optische Ferrule (1) nach einem der Ansprüche 7 bis 9,
**dadurch gekennzeichnet,**
**dass** aus jeder planaren zweiten Führungsfläche (25) im nutförmigen Teilabschnitt (7₁) jedes Führungsbereich (7) jeweils eine zweite Zentrierstütze (30) zur Feinausrichtung zwischen der optischen Ferrule (1) und der optischen Gegenferrule (6) hervorragt.

11. Optische Ferrule (1) nach Anspruch 6 und 10,
**dadurch gekennzeichnet,**
**dass** jede erste Zentrierstütze (24) und jede zweite Zentrierstütze (30) auf einer zweiten Schnittebene (31) der optischen Ferrule (1) liegen.

12. Optische Ferrule (1) nach einem der Ansprüche 3 bis 11,
**dadurch gekennzeichnet,**
**dass** in der optischen Ferrule (1) seitlich zum Strahlformungsmittel (9) und zu jedem Führungsbereich (7) jeweils wenigstens ein Zentriermittel (32) mit jeweils wenigstens einer weiteren Zentrierfläche (33, 34) ausgebildet ist, welche jeweils eine erste Richtungskomponente in der Steckrichtung S und eine zweite Richtungskomponente in einer zu einem Flächenvektor der planaren ersten Führungsfläche (19) entgegengesetzten Richtung aufweist.

13. Optische Ferrule (1) nach Anspruch 12,
**dadurch gekennzeichnet,**
**dass** die wenigstens eine weitere Zentrierfläche (33, 34) eine vierte Zentrierfläche und eine fünfte Zentrierfläche ist, wobei die vierte Zentrierfläche (33) zur Grobzentrierung der optischen Ferrule (1) und der optischen Gegenferrule (6) in der zweiten Querrichtung z der fünften Zentrierfläche (34) zur Feinzentrierung der optischen Ferrule (1) und der optischen Gegenferrule (6) in der zweiten Querrichtung z axial in der Steckrichtung S vorgelagert ist.

14. Optischer Steckverbinder (40) aufweisend eine optische Ferrule (1) nach einem der Ansprüche 1 bis 13, eine Feder (48) und ein die optische Ferrule (1) und die Feder (48) aufnehmendes Steckverbindergehäuse (42), wobei die Feder (48) derart zwischen dem Steckverbindergehäuse (42) und der optischen Ferrule (1) in der Steckrichtung S angeordnet ist, dass die Feder (48) vorgespannt ist, und wobei die optische Ferrule (1) im Steckverbindergehäuse (42) durch eine Federkraft der vorgespannten Feder (48) in der Steckrichtung S elastisch bewegbar angeordnet ist.

15. Optische Steckverbindung (39) aus einem optischen Steckverbinder (40) gemäß Anspruch 14 und einem zugehörigen optischen Gegensteckverbinder (41), wobei der optische Gegensteckverbinder (41) eine optische Gegenferrule (6) und ein die optische Gegenferrule (6) aufnehmendes Gegensteckverbindergehäuse (43) aufweist, das mit dem Steckverbindergehäuse (42) verbindbar ist, wobei die optische Ferrule (1) und die optische Gegenferrule (6) optisch und mechanisch miteinander gekoppelt sind, indem im nutförmigen Teilabschnitt (7₁) jedes Führungsbereichs (7) der optischen Ferrule (1) der rippenförmige Teilabschnitt (8₁) des zugehörigen Gegenführungsbereichs (8) der optischen Gegenferrule (6) aufgenommen ist.
